(19) Europäisches Patentamt / European Patent Office / Office européen des brevets

(11) **EP 3 994 444 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **20733648.8**

(22) Anmeldetag: **24.06.2020**

(51) Internationale Patentklassifikation (IPC):
**G01N 5/02** (2006.01) **A61L 15/60** (2006.01)
**G01N 15/08** (2006.01)

(52) Gemeinsame Patentklassifikation (CPC):
**G01N 5/02; G01N 15/08;** G01N 2015/0866

(86) Internationale Anmeldenummer:
**PCT/EP2020/067588**

(87) Internationale Veröffentlichungsnummer:
**WO 2021/001221 (07.01.2021 Gazette 2021/01)**

(54) **VERFAHREN ZUR BESTIMMUNG VON KENNGRÖSSEN VON SUPERABSORBERN, VERWENDUNG UND VORRICHTUNG**

METHOD FOR DETERMINING CHARACTERISTICS OF SUPER-ABSORBENTS, USES AND DEVICE

PROCÉDÉ DE DÉTERMINATION DE GRANDEURS CARACTÉRISTIQUES DE SUPERABSORBANTS, UTILISATIONS ET DISPOSITIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.07.2019 EP 19184461**

(43) Veröffentlichungstag der Anmeldung:
**11.05.2022 Patentblatt 2022/19**

(73) Patentinhaber: **BASF SE**
**67056 Ludwigshafen am Rhein (DE)**

(72) Erfinder:
• **DANIEL, Thomas**
**67056 Ludwigshafen (DE)**
• **TOENNESSEN, Markus**
**67056 Ludwigshafen (DE)**
• **BAUDUIN, Christophe**
**67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A2-03/026707 US-A1- 2018 043 052**

• **POURJAVADI ET AL: "Taguchi optimized synthesis of collagen-g-poly(acrylic acid)/kaolin composite superabsorbent hydrogel", EUROPEAN POLYMER JOURNAL, PERGAMON PRESS LTD. OXFORD, GB, Bd. 44, Nr. 4, 26. Januar 2008 (2008-01-26), Seiten 1209-1216, XP022561572, ISSN: 0014-3057**
• **KRZYSZTOF LEJCUS: "Swelling Behaviour of Superabsorbent Polymers for Soil Amendment under Different Loads", POLYMERS, Bd. 10, Nr. 3, 6. März 2018 (2018-03-06), Seite 271, XP055735430, CH ISSN: 2073-4360, DOI: 10.3390/polym10030271**
• **MARKUS FRANK: "Superabsorbents", ULLMANN'S ENCYCLOPEDIA OF INDUSTRIAL CHEMISTRY, Bd. 35, 1. Januar 2012 (2012-01-01), Seiten 213-232, XP055500632,**

**Beschreibung**

Die vorliegende Erfindung betrifft ein Verfahren zur Messung der Absorptionskapazität von Superabsorbern unter Druck. Ferner betrifft sie die Bestimmung von Quellkonstante k und charakteristischer Quellzeit $\tau$ des betreffenden Superabsorbers aus den dabei gemessenen Werten sowie ein Verfahren zur Bestimmung von Kenngrößen des betreffenden Superabsorbers, wobei die Kenngröße mittels einer vorher gemessenen Korrelation zwischen Quellkonstante k und der Kenngröße oder mittels einer vorher gemessenen Korrelation zwischen charakteristischer Quellzeit $\tau$ und der Kenngröße oder mittels einer vorher gemessenen Korrelation zwischen dem Betrag der Differenz zweier unter verschiedenen Drücken ermittelten Absorptionskapazitätswerte und der Kenngröße ermittelt wird.

Superabsorber werden zur Herstellung von Windeln, Tampons, Damenbinden und anderen Hygieneartikeln, aber auch als wasserzurückhaltende Mittel im landwirtschaftlichen Gartenbau verwendet. Die Superabsorber werden auch als wasserabsorbierende Polymere bezeichnet.

Die Herstellung von Superabsorbern wird in der Monographie "Modern Superabsorbent Polymer Technology", F.L. Buchholz und A.T. Graham, Wiley-VCH, 1998, Seiten 71 bis 103, beschrieben.

DE 38 31 272 A1 offenbart ein Verfahren zur Messung der Absorptionsgeschwindigkeit mittels Leitfähigkeitsmessung.

ChemKon (Chemie konkret), Band 20, Jahrgang 2013, Seiten 127 bis 130 beschreibt die Messung der Quellungskinetik bei Superabsorbern mittels Extinktionsmessung unter Verwendung von Dextranblau. Polymer Testing, Band 62, Jahrgang 2017, Seiten 110 bis 114 beschreibt ein sehr ähnliches Verfahren. WO 2019/162216 A1 beschreibt ein Verfahren zur Messung von Kenngrößen von Superabsorbern, wobei überschüssige wässrige Lösung oder Dispersion vorgelegt wird, der Superabsorber in der vorgelegten wässrigen Lösung oder Dispersion unter Rühren gequollen wird, in der wässrigen Lösung oder Dispersion mindestens eine Komponente A gelöst oder dispergiert ist und die Anreicherung der mindestens einen Komponente A in der wässrigen Lösung oder Dispersion während des Quellens des Superabsorbers gemessen wird, dadurch gekennzeichnet, dass über die Anreicherung der mindestens einen Komponente A in der wässrigen Lösung oder Dispersion das zeitabhängige Quellverhalten gemessen und daraus die Quellkonstante k oder die charakteristische Quellzeit $\tau$ berechnet wird, die Kenngröße von der Permeabilität des Superabsorbers abhängt und die Kenngröße mittels einer vorher gemessenen Korrelation zwischen Quellkonstante k und Kenngröße oder charakteristischer Quellzeit $\tau$ und Kenngröße ermittelt wird.

US 9 285 302 B2 und ihr Äquivalent EP 2 535 027 A1 beschreiben ein als "K(t)-Methode" bezeichnetes Verfahren zum Bestimmen der Zeitabhängigkeit der Permeabilität und der Absorptionskinetik von Superabsorbern.

US 2018/0043052 A1 beschreibt ein Verfahren zur Bestimmung der "Volumetrie Absorption under Load", bei der das Quellverhalten eines Superabsorbers in Abhängigkeit von der Zeit gemessen wird, indem bei einem vorgegebenen Druck der mit der Zeit durch Quellung des Superabsorbers kleiner werdende Abstand zwischen einem auf der Superabsorber-Probe aufliegenden metallischen Reflektor und einem oberhalb davon fest angeordneten Ultraschall-Distanzmessgerät aufgezeichnet wird. A. Pourjavadi et al. beschreiben in Eur. Polym. J., 44 (2008) 1209 - 1216 die Herstellung eines Komposits aus Collagen-basiertem Polyarylat mit Kaolin und bestimmen dessen Quellverhalten durch Messungen der AUL (Definition s. unten) im Verlauf der Quellung unter einem jeweils vorgegebenen Druck. K. Lejcus et al. berichten in Polymers 2018, 10, 271 über das Quellverhalten von Superabsorbern zur Bodenverbesserung, wobei die Ausdehnung des Superabsorbers bei der Quellung mit einem Kraftsensor bestimmt wird. M. Frank gibt in Ullmann's Encyclopedia of Industrial Chemistry, Wiley-VCH Verlag, Weinheim 2012 unter dem Stichwort "Superabsorbents" einen allgemeinen Überblick über dieses Gebiet der Technik, einschließlich einer Beschreibung der Messung der Absorption unter Druck. WO 03/026707 A2 offenbart ebenfalls ein Verfahren zur Messung der Absorptionskapazität von Superabsorbern unter Druck.

Aufgabe der vorliegenden Erfindung war die Bereitstellung eines verbesserten Verfahrens zur Messung der Absorptionskapazität von Superabsorbern unter Druck. Dieses Verfahren sollte insbesondere in einfacher Weise die Messung der Absorptionskapazität bei unterschiedlichem Druck vereinfachen und beschleunigen sowie möglichst automatisiert ablaufen können. Weitere Aufgaben der Erfindung sind ein Verfahren zur Bestimmung von Quellkonstante k und charakteristischer Quellzeit $\tau$ des betreffenden Superabsorbers aus den bei der Bestimmung seiner Absorptionskapazität bei verschiedenen Drücken gemessenen Werten sowie ein Verfahren zur Bestimmung von Kenngrößen des betreffenden Superabsorbers, wobei die Kenngröße mittels einer vorher gemessenen Korrelation zwischen Quellkonstante k und der Kenngröße oder mittels einer vorher gemessenen Korrelation zwischen charakteristischer Quellzeit $\tau$ und der Kenngröße oder mittels einer vorher gemessenen Korrelation zwischen dem Betrag der Differenz zweier unter verschiedenen Drücken ermittelten Absorptionskapazitätswerte und der Kenngröße ermittelt wird.

Gelöst wurde die Aufgabe durch ein Verfahren zur Messung der Absorptionskapazität von Superabsorbern unter Druck, das dadurch gekennzeichnet ist, dass der auf eine Probe des Superabsorbers angewendete Druck während der Messung stufenweise reduziert und jeweils die Absorptionskapazität beim vorliegenden Druck und ihre Abhängigkeit von der Messdauer bestimmt wird.

Aus den dabei gemessenen Werten können Quellkonstante k und charakteristische Quellzeit $\tau$ des betreffenden

Superabsorbers ermittelt werden und aus diesen Werten wiederum können andere Kenngrößen des betreffenden Superabsorbers mittels einer vorher gemessenen Korrelation zwischen Quellkonstante k und Kenngröße oder charakteristischer Quellzeit $\tau$ und Kenngröße ermittelt werden. Weiterhin können solche Kenngrößen auch aus der Differenz der Absorptionskapazität bei zwei unterschiedlichen Drücken mittels einer vorher gemessenen Korrelation zwischen dem Betrag dieser Differenz und der Kenngröße ermittelt werden.

Im Verfahren der vorliegenden Erfindung wird die Aufnahmefähigkeit (Absorptionskapazität) eines Superabsorbers für Flüssigkeit unter Druck bestimmt. Derartige Verfahren sind bekannt. Dazu wird eine Probe eines Superabsorbers unter Druck in einer Messzelle mit flüssigkeitsdurchlässigem Boden vorgelegt und durch den Boden so mit Flüssigkeit in Kontakt gebracht, dass der Superabsorber diese konstant unter Quellen gegen den angelegten Druck ansaugt, sie aber nicht hydrostatisch in die Messzelle gedrückt wird. Der Superabsorber nimmt dabei eine gewisse Flüssigkeitsmenge auf, die gravimetrisch bestimmt und in Gramm aufgenommener Flüssigkeit pro Gramm Superabsorber ausgedrückt wird.

Das erfindungsgemäße Verfahren ist anwendbar auf alle Superabsorber, insbesondere auf handelsübliche partikuläre Superabsorber auf Basis vernetzter, teilneutralisierter Acrylsäure. Handelsübliche partikuläre Superabsorber zum Einsatz in Hygieneprodukten weisen üblicherweise eine Korngrößenverteilung auf, bei der mindestens 95 Gew.-% aller Partikel im Korngrößenbereich von im Allgemeinen mindestens 50 $\mu$m, vorzugsweise mindestens 100 $\mu$m bis im Allgemeinen höchstens 1000 $\mu$m, vorzugsweise höchstens 850 $\mu$m liegen. Das erfindungsgemäße Verfahren ist dabei nicht nur für die typischerweise durch Mahlung entstehenden, etwas breiteren Korngrößenverteilungen innerhalb dieses Bereichs geeignet, sondern auch für sehr enge Korngrößenverteilungen innerhalb dieses Bereichs, wie sie beispielsweise bei Suspensions-, Sprüh- oder Vertropfungspolymerisationen entstehen. Auch Agglomerate in diesem Korngrö-βenbereich, die aus kleineren Primärpartikeln zusammengesetzt sind, können mit dem erfindungsgemäßen Verfahren analysiert werden.

Der Superabsorber hat im Allgemeinen eine Permeabilität ("Saline Flow Conductivity", "SFC", Messmethode unten beschrieben) von mindestens 10 x $10^{-7}$ $cm^3$s/g. Weiterhin hat er im Allgemeinen eine Zentrifugenretentionskapazität ("Centrifuge Retention Capacity", "CRC", Messmethode unten beschrieben) von mindestens 10 g/g.

Die Probenmenge ist der zu bestimmenden Kenngröße anzupassen und kann sich von Kenngröße zu Kenngröße unterscheiden. Im Allgemeinen sind im erfindungsgemäßen Verfahren Probenmengen von mindestens 0,5 g, vorzugsweise mindestens 1 g, sowie höchstens 30 g, vorzugsweise höchstens 20 g und in besonders bevorzugter Weise höchstens 5 g Superabsorber ausreichend. Die Größe und die Form der Messzelle kann ebenso an die zu ermittelnde Kenngröße angepasst werden. Üblicherweise verwendet man eine zylindrische Messzelle mit einem Innendurchmesser im Bereich von mindestens 5 cm bis höchstens 7 cm, so dass die Probe eine kreisrunde Fläche mit einem Durchmesser von mindestens 5 cm bis höchstens 7 cm belegt. Eine zylindrische Geometrie der Messzelle ist bevorzugt, jedoch kann auch jede andere beliebige Geometrie - beispielsweise oval, quadratisch, dreieckig, sechseckig, sternförmig - verwendet werden.

Die Dauer der Messung bei einem gegebenen Druck beträgt üblicherweise bis zur Erreichung eines stabilen Wertes. Stabil ist der Wert insbesondere dann, wenn die bei längerer Messdauer gemessenen Werte die Genauigkeit der folgenden Auswertung nicht mehr in statistisch signifikanter Weise verändern. Im Allgemeinen beträgt die Messzeit mindestens eine Minute, vorzugsweise mindestens 15 Minuten, besonders bevorzugt mindestens 30 Minuten sowie höchstens 240 Minuten, vorzugsweise höchstens 120 Minuten, besonders bevorzugt höchstens 90 Minuten. In den meisten Fällen ist nach einer Messzeit von 60 Minuten ein stabiler Wert erreicht. Die Messung bei einer gegebenen Druckstufe kann nach Erreichung eines stabilen Wertes bei einer gegebenen Druckstufe auch automatisch und flexibel beendet und die Messung bei der nächsten Druckstufe begonnen werden.

Um vergleichbare Ergebnisse zu erhalten, ist es insbesondere wichtig, eine definierte Flüssigkeit zu verwenden, da die Aufnahmefähigkeit von Superabsorbern stark davon abhängt. Um die Aufnahmefähigkeit unter realistischen Bedingungen der Verwendung von Superabsorbern abzubilden, wird meist physiologische Kochsalzlösung (0,9 Gew.-%ige wässrige Natriumchloridlösung) oder eine Urin nachgebildete Lösung verschiedener Salze verwendet.

Das mit weitem Abstand am meisten verbreitete und übliche Messverfahren für die Aufnahmefähigkeit eines Superabsorbers für Flüssigkeit unter Druck ist die gravimetrische Bestimmung der Absorption von Superabsorbern unter Druck ("Absorption against Pressure", "AAP", auch "Absorption under Load", "AUL") nach der Standardmethode NWSP 242.0.R2 (15). Diese Methode gehört zu den mit "NWSP" bezeichneten und auf diesem Gebiet der Technik üblichen Standard-Testmethoden, die in: "Nonwovens Standards Procedures", Ausgabe 2015, gemeinsam herausgegeben von EDANA (European Disposables and Nonwovens Association, Avenue Herrmann Debroux 46, 1160 Brüssel, Belgien, www.edana.org) und INDA (Association of the Nonwoven Fabrics Industry, 1100 Crescent Green, Suite 115, Cary, North Carolina 27518, U.S.A., www.inda.org) beschrieben werden. Diese Veröffentlichung ist sowohl von EDANA als auch von INDA erhältlich.

Bei dieser Methode wird die vom geprüften Superabsorber unter standardisierten Messbedingungen, zu denen der angewendete Druck gehört, im Verlauf von 60 Minuten aufgenommene Masse an 0,9 Gew.-%iger wässriger Kochsalzlösung gravimetrisch bestimmt.

Im Folgenden wird die Erfindung mit Bezug auf diese Ausführungsform nach der Standardmethode NWSP 242.0.R2 (15) beschrieben. Für im Folgenden nicht erwähnte Einzelheiten der Messung nach NWSP 242.0.R2 (15) wird ausdrücklich auf die Methodenbeschreibung verwiesen. Abweichungen von NWSP 242.0.R2 (15) und der folgenden Beschreibung sind möglich, beispielsweise bei der Form oder dem Aufbau der Messzelle, der verwendeten Absorptionsflüssigkeit, der Messzeit oder dem angewendeten Druck. Im Einzelfall ist jedoch die Vergleichbarkeit der Ergebnisse mit den Ergebnissen der Standardmethode oder anderer Ausführungsformen der Erfindung zu prüfen, wenn Ergebnisse verschiedener Methoden verglichen werden sollen. In aller Regel sind etwaige Abweichungen zwischen verschiedenen Methoden korreliert und lassen sich anhand vorheriger Vergleichsmessungen bei Bedarf so korrigieren, dass die Ergebnisse vergleichbar werden.

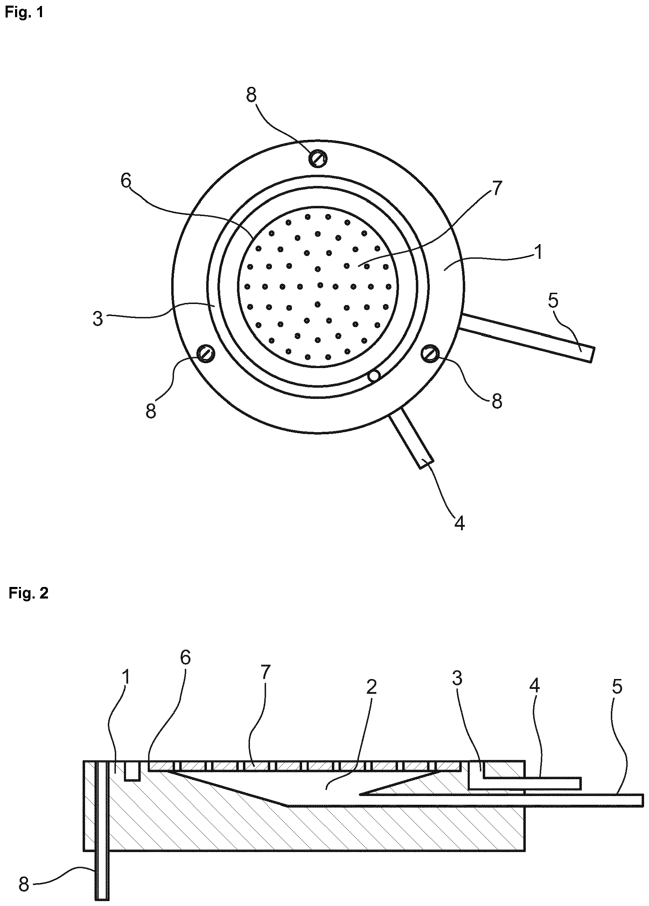

Eine auf diesem Gebiet der Technik etablierte Abweichung von der exakten Vorschrift NWSP 242.0.R2 (15) ist es, die Petrischale mit dem Vorrat an zu absorbierender Flüssigkeit durch eine Vorrichtung zu ersetzen, die den Flüssigkeitsspiegel auch über mehrere Messungen hinweg konstant auf der einzustellenden Ebene (Oberfläche der Glasfritte) hält. Dies vereinfacht und beschleunigt die Messungen mehrerer Proben hintereinander, da so nur die jeweilige Messzelle mit der Probe zu tauschen ist, aber die Einstellung des Flüssigkeitsspiegels nur einmalig vor aufeinanderfolgenden Messungen einer Reihe vorbereiteter Messzellen vorgenommen werden muss. Eine einfache und bekannte derartige Vorrichtung ist eine Vorratsflasche mit Bodenablauf, die die Petrischale der Vorschrift NWSP 242.0.R2 (15) oder ein vergleichbares Gefäß mittels einer Schlauchverbindung mit Flüssigkeit versorgt und in der das Niveau der Flüssigkeit in der Petrischale oder dem vergleichbaren Gefäß durch die Belüftung der Vorratsflasche mittels eines Tauchrohrs eingestellt werden kann. Eine derartige Vorrichtung ist beispielsweise in Fig. 1 von EP 1 611 949 A1 dargestellt, die auch im Übrigen ein Beispiel einer Abwandlung der Apparatur laut Vorschrift NWSP 242.0.R2 (15) darstellt, mit der bei gleichen Probenmengen, Drücken und Messdauern auch gleiche Ergebnisse wie nach Vorschrift NWSP 242.0.R2 (15) erzielt werden. Das untere Ende des Belüftungsrohrs in der Vorratsflasche liegt dabei stets auf demselben Niveau wie der Flüssigkeitsspiegel in der Messvorrichtung, der so durch Verschieben des Belüftungsrohrs in der Vorratsflasche eingestellt werden kann. Unter Ausnutzung desselben physikalischen Prinzips wird auch in EP 1516884 A2 wird der Flüssigkeitsspiegel in einer Messvorrichtung mittels Vorratsflasche und Tauchrohr konstant gehalten, dort allerdings zur Bestimmung einer anderen Eigenschaft der Probe der Flüssigkeitsspiegel oberhalb der Probe.

Ein weiterer Vorteil einer derartigen Vorratsflasche zum Flüssigkeitsnachschub ist es, dass die Vorratsflasche auf eine Waage gestellt werden kann und so die von der Probe aufgenommene Flüssigkeitsmenge direkt gravimetrisch bestimmt werden kann. Die Verbindung zur Vorratsflasche auf der Waage wird dabei so gewählt, dass sie den Messwert durch ihr Eigengewicht nicht signifikant verfälscht. Ein relativ dünner Silikonschlauch, typischerweise in der Größenordnung von 6 mm Außendurchmesser, ist gut geeignet.

Die Bestimmung der AAP eines Superabsorbers nach NWSP 242.0.R2 (15) erfolgt nach Methodenbeschreibung unter einem Druck von 0.7 psi (49 g/cm$^2$, 4826 Pa) und ergibt den üblicherweise als "AAP 0,7 psi" oder "AUL 0,7 psi" bezeichneten Wert. Es ist jedoch auch möglich, durch Variation des in der Messapparatur verwendeten Gewichts einen anderen Druck einzustellen. Öfter gemessen und angegeben wird insbesondere die AAP 0,3 psi, die analog bei einem Druck von 0,3 psi (21 g/cm$^2$, 2068 Pa) bestimmt wird. Werte bei anderen Drücken, etwa die AAP 0,1 psi (7 g/cm$^2$, 689 Pa) oder die AAP 0,9 psi (63 g/cm$^2$, 6205 Pa), werden analog durch entsprechende Variation des Gewichts bestimmt. Ohne Gewicht kann eine "AAP 0 psi" oder AAP 0,0 psi (0 g/cm$^2$, 0 Pa) bestimmt werden. Auf diesem Gebiet der Technik sind die Benennungen mit Druckangabe in der Einheit "psi" international üblich, so dass im Folgenden auf die Wiederholung der zusätzlichen Angaben metrischer Werte verzichtet wird. Die Druckangabe bezieht sich auch immer nur auf den durch das Gewicht auf dem Superabsorber lastenden Druck und nicht auf absoluten Druck oder Umgebungsdruck.

Eine bevorzugte Ausführungsform des Verfahrens der vorliegenden Erfindung ist im Grundsatz eine AAP-Messung nach NWSP 242.0.R2 (15), bei der jedoch zunächst ein AAP-Wert bei einem höheren Druck bestimmt wird, dann das in der Messapparatur verwendete Gewicht reduziert wird, um mindestens einen weiteren AAP-Wert bei einem niedrigeren Druck zu bestimmen. Vorzugsweise wird zunächst die AAP 0,7 psi bestimmt, dann das Gewicht reduziert und die AAP 0,3 psi bestimmt und abschließend das Gewicht entfernt und die AAP 0 psi bestimmt. Dabei wird außerdem nicht nur die jeweils nach der jeweiligen Messzeit - vorzugsweise 60 Minuten - beim gegebenen Druck absorbierte Gesamtmasse an Kochsalzlösung bestimmt, sondern die absorbierte Masse als Funktion der Zeit registriert.

Um die absorbierte Flüssigkeitsmenge als Funktion der Zeit zu ermöglichen, wird anders als in NWSP 242.0.R2 (15) nicht die Messzelle gewogen, sondern in der Apparatur nach NWSP 242.0.R2 (15) die dort verwendete Petrischale oder andere Schale, in der die Messzelle auf einer Filterplatte steht (Methodenbeschreibung Ziff. 6.1), mittels einer kommunizierenden Röhre, vorzugsweise einem Schlauch, beispielsweise einem Silikonschlauch, mit einer Vorratsflasche für die zu absorbierende 0,9 %ige wässrige Kochsalzlösung verbunden, die auf einer Waage steht, so wie oben beschrieben und beispielsweise auch in Fig. 1 von EP 1 611 949 A1 dargestellt.

Auf diese Weise kann die vom Superabsorber absorbierte Flüssigkeitsmenge kontinuierlich gravimetrisch erfasst werden. In einfacher Weise kann dies durch Verwenden einer digitalen Waage erfolgen, die das aktuelle Gewicht der Flasche in regelmäßigen zeitlichen Abständen an einen Rechner ausgibt, beispielsweise im Sekundentakt.

In einer bevorzugten Ausführungsform der Erfindung wird ein Tauchrohr verwendet, dessen Durchmesser, insbesondere der am unteren Ende, nicht zu "Stoßen" von in die Vorratsflasche eintretenden großen Gasblasen führt, sondern zu einem Strom feiner Gasbläschen. Dies vermeidet die von größeren Gasblasen verursachten Schwankungen des Messwerts der Waage. Derartige durch stoßweisen Druckausgleich in der Flasche erzeugten Schwankungen verfälschen zwar nicht unbedingt statistisch ausgewertete Messwerte, können aber die Auswertung, insbesondere die automatische Auswertung, unnötig erschweren. Es ist aber meist nicht nötig, eine durchgehende Kapillare als Tauchrohr zu verwenden. Beispielsweise wird als Tauchrohr ein Glasrohr verwendet, das am unteren Ende in eine Spitze ausgezogen wurde. Es sind jedoch auch andere Ausführungsformen möglich, beispielsweise kann auch ein Silikonschlauch mit durchbohrtem Stopfen oder allgemein jede Form eines Rohrs mit Verengung verwendet werden. Die optimale Geometrie ist mit wenigen Routineversuchen an den konkreten Messaufbau und das akzeptable Ausmaß an Stoßen bei der Gaszufuhr anzupassen. Es muss auf jeden Fall jederzeit so viel Gas in die Vorratsflasche eintreten können, dass die Aufnahmegeschwindigkeit für die Flüssigkeit durch den Superabsorber allein vom Superabsorber und nicht von der Gaszufuhr abhängt.

Bei der Durchführung der Messung ist ebenso wie bei der statischen Durchführung nach NWSP 242.0.R2 (15) darauf zu achten, dass der Flüssigkeitspegel in der Petrischale oder anderen Schale so hoch ist, dass die Filterplatte vollständig durchfeuchtet wird, ohne dass Flüssigkeit auf der Filterplatte steht oder gar hydrostatisch in die Messzelle gedrückt wird. Das untere Ende des Tauchrohrs ist daher durch Verschieben in der Vorratsflasche oder Höhenveränderung der Vorratsflasche in der Höhe so einzustellen, dass es wie in NWSP 242.0.R2 (15) beschrieben auf der Höhe der Oberkante der Filterplatte steht. Zusätzlich

oder stattdessen kann selbstverständlich auch die Höhe der Messvorrichtung angepasst werden.

Es ist auch darauf zu achten, dass die Oberkante der Filterplatte, damit auch die Petrischale oder andere Schale waagrecht steht. Es ist daher meist vorteilhaft, wenn neben der Höheneinstellung des Flüssigkeitsspiegels durch ein verschiebbares Tauchrohr in der Vorratsflasche oder Höhenveränderung der Vorratsflasche auch die Petrischale oder andere Schale in ihrer Höhe und weiter bevorzugt auch in ihrer Neigung einstellbar ist. Im einfachsten Fall wird die Messzelle mit der Petrischale dazu auf eine Labor-Hebebühne gestellt. Besser sind jedoch höhenverstellbare einzelne Standfüße. Derartige Gerätestandfüße sind bekannt und für zahlreiche Geräte üblich. Beispielsweise werden in einem Innengewinde des Gestells drehbare Gewindestangen angeordnet, auf deren unteren Enden die Konstruktion steht. Ein Gestell mit drei derartigen Standfüßen ist am einfachsten einzustellen. Dies kann auch eine einheitliche Konstruktion mit der Schale sein, in der Filterplatte und darauf dann die Messzelle angeordnet sind.

Die Höhe des Flüssigkeitsspiegels wird dann durch Anpassung der Höhe des unteren Endes des Tauchrohrs in der Vorratsflasche (oder Höhenveränderung der ganzen Flasche) und der Standfüße der Unterkonstruktion der Messzelle eingestellt.

In einer vorteilhaften Ausführungsform der Erfindung wird die gemäß der Beschreibung von NWSP 242.0.R2 (15) (Methodenbeschreibung Ziff. 6.2) verwendete Filterplatte durch eine Lochplatte ersetzt. Die Lochplatte kann aus jedem Material gefertigt werden, das in der zur erfindungsgemäßen Bestimmung der Absorptionsfähigkeit unter Druck verwendeten Flüssigkeit weder löslich noch quellbar ist und gegen diese Flüssigkeit auch so weit korrosionsfest ist, dass weder Messungen verfälscht werden noch die Lochplatte unerwünscht häufig ersetzt werden muss. Grundsätzlich verwendbar sind beispielsweise Stein, Keramik, Metall, Holz, Glas, Quarz und Kunststoff. Die Oberflächen der eingesetzten Materialien können beschichtet sein, beispielsweise hydrophiliert, emailliert oder anti-mikrobiell beschichtet. Um Verunreinigungen oder Luftblasen in der Apparatur gut erkennen zu können, sind transparente oder durchsichtige Materialien bevorzugt. Beispiele dafür sind Polycarbonat, Polymethacrylat, Styrol-Acrylnitril-Copolymere, und transparente oder durchsichtige anorganische wasserunlösliche Stoffe wie Glas oder Quarz.

Diese Lochplatte hat eine Dicke von mindestens 3 mm, vorzugsweise mindestens 5 mm und höchstens 20 mm, vorzugsweise höchstens 15 mm. Die Dicke beträgt beispielsweise 6 mm oder 10 mm.

Die Lochplatte weist Löcher auf, die ungehinderten Flüssigkeitsdurchtritt zur Messzelle erlauben. Die Löcher können jede beliebige Form aufweisen. Bevorzugt sind runde Löcher, die durch Bohrung leicht herzustellen und auch leicht zu reinigen sind. Die Bohrungen haben im Allgemeinen einen Durchmesser von mindestens 0,5 mm, vorzugsweise mindestens 1 mm, sowie höchstens 5 mm, vorzugsweise höchstens 3 mm. Der Durchmesser beträgt beispielsweise 2 mm. Werden andere Lochquerschnittsformen gewählt, so wird im Allgemeinen ihre Größe so gewählt, dass ihre Öffnungsflächen der Öffnungsfläche der Bohrungen beim angegebenen Durchmesser entsprechen.

Die Verteilung der Löcher kann regelmäßig oder unregelmäßig sein. Eine gleichmäßige Verteilung über die Lochplatte ist bevorzugt. Die Anzahl der Löcher, ihre Form und ihre Anordnung sind so über die Lochplatte zu verteilen, dass bei Verwendung der Lochplatte dieselben Messergebnisse an einem Superabsorber erhalten werden wie unter Verwendung der Glasfritte nach NWSP 242.0.R2 (15). Werden diese Ergebnisse - im Rahmen der in NWSP 242.0.R2 (15) definierten Messgenauigkeit - nicht erreicht, so ist die Anzahl der Löcher zu erhöhen, ihre Verteilung über die Fläche der Platte zu vergleichmäßigen und/oder ihr Querschnitt zu vergrößern. Wird dadurch die Tragfähigkeit der Lochplatte für die Messzelle soweit verringert, dass ihre Oberfläche nicht mehr eben ist, ist ihre Dicke zu erhöhen.

Selbst wenn die mit Lochplatte und die mit Glasfritte nach NWSP 242.0.R2 (15) erhaltenen Messwerte für einen Superabsorber nicht identisch sein sollten, genügt es auch, die mit Lochplatte ermittelten Messwerte mit den nach der NWSP 242.0.R2 (15) ermittelten Messwerten linear zu korrelieren. Wenn die Anzahl, der Durchmesser und die Platzierung der Löcher in der Lochplatte so gewählt werden, dass die Korrelation der Messergebnisse linear ist und einen Korrelationskoeffizienten ($r^2$) von mindestens 0,90, bevorzugt mindestens 0,95, am meisten bevorzugt von 0,98 bis 1,00 aufweist, liegt eine bekannte feste Beziehung zwischen den mit beiden Methoden gewonnenen Ergebnissen vor, so dass sie umgerechnet und ausgewertet werden können.

Gute Erfahrungen im erfindungsgemäßen Verfahren wurden mit einer Lochplatte mit der allgemeinen Form der in Fig. 1 dargestellten Lochplatte 7 gemacht, die aus Plexiglas mit 6 mm Dicke besteht und bei einem Durchmesser von 89,5 mm mit 52 in konzentrischen Kreisen angeordneten runden Löchern (Bohrungen) von je 2 mm Durchmesser versehen ist.

Die Figuren 1 und 2 zeigen eine beispielhafte Konstruktion einer Unterkonstruktion in einem erfindungsgemäß zu verwendenden Messaufbau mit integrierter Schale und Lochplatte.

Fig. 1 zeigt in Aufsicht und Fig. 2 im Querschnitt einen Korpus 1 mit einer zentralen konischen Vertiefung 2, die am tiefsten Punkt mit einem Zulaufrohr 5 verbunden ist, das durch eine seitliche Bohrung in den Korpus 1 eingeführt ist. Ein ringförmiger Kanal 3 um die zentrale Vertiefung 2 ist mit einem Ablaufrohr 4 verbunden, das ebenfalls durch eine seitliche Bohrung in den Korpus 1 eingeführt ist. Rund um die zentrale konische Vertiefung weist der Korpus einen Kragen 6 auf, der als Lager für eine herausnehmbare Lochplatte 7 dient. Die Tiefe des Kragens ist ebenso groß wie die Dicke der Lochplatte, so dass deren Oberfläche in der Ebene der Oberfläche des Korpus 1 liegt. Drei Gewindestangen 8 mit einem Schlitz für Schraubenzieher am oberen Ende sind in Gewindebohrungen des Korpus angeordnet, so dass der Korpus auf diesen Gewindestangen steht und durch deren Verdrehen mittels Schraubenzieher in der Höhe verändert und waagrecht ausgerichtet werden kann. Es ist selbstverständlich auch möglich, Gewindestangen mit daran befestigten Griffen oder Füßen zu verwenden, die manuell verdreht werden können, oder die Höhenverstellung motorisch vorzunehmen. Andere Höhenverstellungen als Gewindestangen können ebenso verwendet werden. Die Art der Höhenverstellung ist nicht erfindungswesentlich, solange die mechanische Stabilität und Ausrichtbarkeit der Vorrichtung gegeben sind. Derartige Höhenvorstellungsvorrichtungen sind bekannt, Beispiele sind hydraulische Vorrichtungen, Luftkissen, Flüssigkeitskissen, Zahnrad-/Zahnstangen-Vorrichtungen, Seilzüge oder elektromagnetische Vorrichtungen.

Fig. 2 zeigt die Vorrichtung im Querschnitt. Zur Verdeutlichung sind hier anders als in Fig. 1 Zulauf 5 und Ablauf 4 sowie eine der Gewindestangen 8 in der Ebene des Querschnitts dargestellt, dies ist jedoch keine konstruktive Notwendigkeit und für Herstellung und Bedienung der Vorrichtung aus Platzgründen eher nachteilig.

Die eigentliche Messzelle mit dem Superabsorber wird auf die Lochplatte gestellt. Der Zulauf 5 wird mittels Schlauch mit der Vorratsflasche auf der Waage verbunden und der Ablauf 4 ebenso mit einem Sammelgefäß ausreichender Größe zur Aufnahme nicht absorbierter Flüssigkeit, idealerweise mindestens der Größe der Vorratsflasche für zu absorbierende Flüssigkeit.

Die Dimensionen einer derartigen Unterkonstruktion sind im Hinblick auf die gewünschten Messzellen anzupassen. NWSP 242.0.R2 (15) schreibt für eine Messzelle von 60 mm Durchmesser einen Mindestdurchmesser der Filterplatte von 80 mm vor. Beispielsweise wurden gute Erfahrungen für diesen Messzellendurchmesser dabei mit einer Lochplatte 7 von 90 mm Durchmesser gemacht, die in einem Korpus 1 von 160 mm Durchmesser angeordnet ist. Vorzugsweise ist der Durchmesser des Ablaufs 4 größer als der des Zulaufs 5. Für den beispielsweise genannten Korpus 1 mit 160 mm Durchmesser haben sich ein Zulauf von 4 mm Außendurchmesser (passend zu einem Silikonschlauch von 6 mm Außendurchmesser zur Verbindung mit der Vorratsflasche) und ein Ablauf von 6 mm Außendurchmesser bewährt.

Eine in der Praxis etablierte erfahrungsbasierte Methode, die korrekte Einstellung des Flüssigkeitsspiegels in der Ausführungsform der Erfindung mit Lochplatte (insbesondere einer durchbohrten Plexiglasplatte) statt der in NWSP 242.0.R2 (15) genannten Filterplatte zu überprüfen, besteht darin, die sich bei Anheben oder Absenkung des Tauchrohrs in der Vorratsflasche, der Vorratsflasche und/oder der Schale (etwa den Korpus 1 gemäß den Fig. 1 und 2) mit darin liegender Platte auf deren Oberseite am Ausgang der Bohrungen bildenden Tröpfchen zu beobachten. Legt man nun ein Papierfilter, wie es auch laut Beschreibung von NWSP 242.0.R2 (15) (Methodenbeschreibung Ziff. 6.12) verwendet wird (laborübliches "Schwarzband"-Filterpapier ist ein Beispiel eines gut geeigneten Filterpapiers) von Größe und Form der Platte, auf die Platte, wird die durch die Bohrungen der Platte getretene Flüssigkeit davon aufgenommen. Durch Wägung des Filterpapiers kann diese aufgenommene Flüssigkeitsmenge bestimmt werden. Liegt sie bei einem Durchmesser der Platte von 90 mm nach 5 min Auflagezeit des Papierfilters zwischen 1,5 und 2,5 g, ist die Höheneinstellung korrekt. Liegt sie darunter, steht die Schale zu hoch oder die Vorratsflasche oder das untere Ende des Tauchrohrs zu tief, liegt sie darüber, steht die Schale zu tief oder die Vorratsflasche oder das untere Ende des Tauchrohrs zu hoch. Bei größeren oder kleineren Platten ist der Grammwert entsprechend anzupassen.

In einer bevorzugten Ausführungsform der Erfindung entfällt das laut NWSP 242.0.R2 (15) zwischen Filterplatte und Messzelle angeordnete Filterpapier. Es hat sich insbesondere in der Ausführungsform mit Lochplatte, beispielsweise durchbohrter Kunststoffplatte, als nicht notwendig erwiesen.

Die Änderung des Gewichts nach der jeweiligen Messzeit-vorzugsweise 60 Minuten - kann durch Abnehmen des verwendeten Gewichts für den jeweils höheren Druck und unmittelbares Aufsetzen des Gewichts für den jeweils niedrigeren Druck erfolgen. Es ist möglich, das Gewicht so zu teilen, dass nur der Teil abgenommen werden muss, der dem Mehrgewicht für den höheren Druck entspricht. Im Beispiel von Ziff. 6.5 von NWSP 242.0.R2 (15) (für einen Stempeldurchmesser von 59 mm) ist ein Gewicht von 1340 g für die Bestimmung der AAP 0,7 psi (4826 Pa) genannt und ein Gewicht von 574 g für die Bestimmung der AAP 0,3 psi (2068 Pa). Im erfindungsgemäßen Verfahren kann demnach (bei diesem Stempeldurchmesser) nach einer Stunde Messung das Gewicht von 1340 g abgenommen und durch eines von 574 g ersetzt werden, ebenso möglich ist jedoch die Verwendung eines Gewichts von 574 g und eines Zusatzgewichts von 766 g, das nach der Messung der AAP 0,7 psi (4826 Pa) abgenommen wird, wobei das Gewicht von 574 g zur anschließenden Messung der AAP 0,3 psi (2068 Pa) in der Zelle verbleibt. Andere Gewichte oder Gewichtskombinationen zur Messung bei anderen oder mehr als zwei Drücken können analog leicht errechnet werden. Zur abschließenden Messung ohne Gewicht ("AAP 0 psi" (0 Pa) oder "AAP 0,0 psi" (0 Pa)) werden alle Gewichte abgenommen.

Das Material der Gewichte ist weitgehend unerheblich. Oft werden Metallgewichte verwendet, insbesondere Gewichte aus rostfreiem Stahl. Es ist nicht erforderlich, dass alle Gewichte oder Teilgewichte aus demselben Material bestehen. Es kann bei Verwendung von Teilgewichten aber sogar vorteilhaft sein, das auf der Probe liegende unterste Teilgewicht, also das zur Bestimmung der AAP beim niedrigsten gewählten, von 0 verschiedenem Druck verwendete, aus Kunststoff zu fertigen und die anderen Gewichte zur Volumenersparnis aus dichterem Material wie Metall, insbesondere rostfreiem Stahl. Die Herstellung des untersten Gewichts aus Kunststoff erlaubt 2. eine einfachere Bearbeitung, insbesondere Ausformung der Unterseite. Es kann weiterhin vorteilhaft sein, einen hydrophoben Kunststoff zu verwenden, um Ankleben von gequollenem Superabsorber bei der Abnahme dieses Gewichts zu vermeiden. Ein geeignetes Material sind beispielsweise Polyhalogenolefinpolymere wie etwa teil- oder vollständig fluorierte Polymere wie PTFE (z. B. Teflon®) oder auch fluorierte teilalkoxylierte Polymere wie PFA (z. B. Teflon®-PFA).

Die Probe bleibt dabei dieselbe Probe, sie wird also bei einem Wechsel der Druckstufe nicht ausgetauscht, sondern die Messungen bei den einzelnen Druckstufen werden hintereinander mit derselben Probe in derselben Messzelle ausgeführt.

Die Druckänderung im erfindungsgemäßen Verfahren ist gut automatisierbar. Beispielsweise kann das Gewicht durch einen Roboterarm ausgetauscht oder damit das für die vorherige, höhere Druckstufe verwendete Zusatzgewicht abgenommen werden. Es ist auch möglich, das Gewicht durch einen mechanisch, hydraulisch oder elektrisch angetriebenen Stempel zu ersetzen, der mit einer entsprechenden Gewichtskraft auf die Messzelle drückt.

Im erfindungsgemäßen Verfahren wird der Druck in der Messzelle zwischen den einzelnen Druckstufen stets erniedrigt. Superabsorber geben ihrer Natur gemäß einmal absorbierte Flüssigkeit nicht leicht wieder ab, zudem wird in der im erfindungsgemäßen Verfahren verwendeten Messzelle zwar angebotene Flüssigkeit absorbiert, sie würde darin aber, selbst wenn der Superabsorber sie bei Druckerhöhung in entsprechendem Maße wieder abgeben würde, nicht oder zumindest nicht vollständig in die Vorratsflasche auf der Waage zurückgedrückt und damit in der Messung nicht korrekt erfasst.

In einer bevorzugten Ausführungsform der Erfindung wird auf die Superabsorberprobe in der Messzelle ein Filterpapier oder anderes dünnes Vlies von derselben Fläche und Form wie dem Innenraum der Messzelle gelegt, bei - typischerweise - zylindrischer Messzelle also ein kreisförmiges Filterpapier mit dem Innendurchmesser der Messzelle. Dazu wird vorzugsweise ein Filterpapier wie das in NWSP 242.0.R2 (15) (Methodenbeschreibung Ziff. 6.12) verwendet. Ein Beispiel eines gut geeigneten Filterpapiers ist laborübliches "Schwarzband"-Filterpapier. Erfahrungsgemäß ist die vom Filterpapier aufgenommene Flüssigkeitsmenge im Vergleich mit der vom Superabsorber aufgenommenen so gering, dass sie die Messung nicht wesentlich verfälscht.

Weiterhin wird in einer bevorzugten Ausführungsform der Erfindung zwischen der Unterseite des Gewichts und dem Superabsorber oder dem auf diesem liegenden Filterpapier ein Abstandshalter angeordnet, der bewirkt, dass das Gewicht nicht vollflächig plan auf dem Superabsorber oder dem Filterpapier aufliegt. Grundsätzlich genügt als Abstandshalter mindestens ein Objekt, das an mindestens einer Stelle einen Abstand zwischen Filterpapier und Gewicht herstellt, aber zur Vermeidung von Verfälschungen selbst keine Flüssigkeit absorbiert und dessen Gewicht vorzugsweise so gering ist, dass die Messung nicht über ihren üblichen Fehlerbereich hinaus verfälscht wird; andernfalls muss der durch die Gewichtskraft des Abstandshalters erzeugte Druck auf die Probe bei der Messung eingerechnet oder durch niedrigeres Gewicht kompensiert werden und der Abstandshalter zur Messung einer AAP 0,0 psi (0,0 Pa) entfernt werden.

Im einfachsten Fall genügt als Abstandhalter bereits mindestens ein Stück dünner Draht, vorzugsweise gebogen, beispielsweise eine oder mehrere Büroklammern, zwischen Filterpapier und Gewicht. Bevorzugterweise wird jedoch die Unterseite des Gewichts oder Stempels, mit der dieses oder dieser mit dem Superabsorber oder Filterpapier in Kontakt steht, entsprechend nicht plan ausgestaltet, so dass als Abstandshalter Erhebungen vorliegen. Dies erfolgt beispielsweise durch Einfräsen von parallelen

oder konzentrischen Rillen. Geeignet sind Rillen einer Tiefe von mindestens 1 mm, höchstens 5 mm, beispielsweise 2 mm, die voneinander mindestens 0,5 mm, höchstens 5 mm, beispielsweise 2 mm beabstandet sind. Die Flanken der Rillen können senkrecht zur Oberfläche sein, aber auch flachere Winkel aufweisen, solange sie nicht so flach sind, dass das Filterpapier beim Abheben des Stempels wieder anhaftet. Beispielsweise wurden gute Erfahrungen mit Stempeln gemacht, deren Unterseite parallele Rillen von 2 mm Breite, 2 mm Tiefe und 2 mm Abstand voneinander aufwiesen. Falls Teilgewichte verwendet werden, genügt es, die Unterseite des untersten Teilgewichts, also des zur Bestimmung der AAP beim niedrigsten gewählten, von 0 verschiedenem Druck verwendeten, derart mit einem Abstandshalter auszugestalten.

Die beiden letztgenannten Maßnahmen, nämlich das Filterpapier zwischen Superabsorber-probe und Gewicht oder Stempel sowie der Abstandshalter auf dessen Unterseite, verhindern beim Abheben des Gewichts oder Stempels das Ankleben von gequollenem Superabsorber an dessen Unterseite. Bei einer Bestimmung der "AAP 0,0 psi" (0,0 Pa), also des Aufnahmevermögens des Superabsorbers ohne Druckbelastung zum Abschluss der Messung, würde dieses Ankleben leicht zu Verfälschungen dieses Wertes führen. Wird keine "AAP 0,0 psi" (0,0 Pa) bestimmt, tragen diese beiden Maßnahmen zwar nichts zur Messung bei und sind daher entbehrlich, sie verfälschen jedoch die Messwerte unter Druck nicht oder jedenfalls nicht signifikant.

Es kann weiterhin zur Handhabung vorteilhaft sein, die Außenkanten der Unterseite des Stempels oder Gewichts zu brechen, also rundum abzuschrägen, beispielsweise in einem Winkel von 45 °.

Die mit der erfindungsgemäßen Methode in den jeweils gegenüber der Beschreibung von NWSP 242.0.R2 (15) bevorzugten Ausführungsformen (einschließlich der Lochplatte aus Plexiglas mit 6 mm Dicke, einem Durchmesser von 89,5 mm mit 52 in konzentrischen Kreisen angeordneten Bohrungen von je 2 mm Durchmesser) gemessenen kumulierten Flüssigkeitsmassen jeweils nach 60 Minuten bei einem Druck entsprechen erfahrungsgemäß den bei der Messung exakt nach NWSP 242.0.R2 (15) beim selben Druck erhaltenen Werten mit einer Abweichung von höchstens 0,5 g/g.

Die Quellkonstante k bzw. die charakteristische Quellzeit $\tau$ des untersuchten Superabsorbers können aus seinem zeitabhängigen Quellverhalten gemäß $Q(t) = Q_{max} (1-e^{-kt})$ oder $Q(t) = Q_{max} (1-e^{-t/\tau})$ berechnet werden, wobei $Q(t)$ die Flüssigkeitsaufnahme des Superabsorbers zum Zeitpunkt t und $Q_{max}$ die maximale Flüssigkeitsaufnahme des Superabsorbers bei einem gegebenen Druck ist, die im Allgemeinen nach einer Messzeit t von mindestens 4 r , vorzugsweise mindestens 5 $\tau$ erreicht wird. Im Allgemeinen genügt bei gängigen Superabsorbern eine Messdauer von höchstens 90 Minuten, meist auch eine von höchstens 60 Minuten oder höchstens 30 Minuten, um diese Mindestdauer der Messzeit zu erreichen und zu überschreiten. Vorzugsweise wird bei einem gegebenen Druck für 60 Minuten gemessen. Nach dieser Messdauer ändert sich der Wert von $Q_{max}$ aller praktischen Erfahrung nach nicht mehr messbar oder jedenfalls nicht mehr signifikant. Sollte er sich in theoretisch möglichen Ausnahmefällen auch nach dieser Messdauer doch noch signifikant ändern, ist die Messdauer entsprechend zu verlängern.

Die Auswertung kann nach Linearisierung der Gleichungen graphisch mittels einer Ausgleichsgeraden mit der Steigung -k bzw. -1/$\tau$ erfolgen oder mittels eines der in gängiger Computer-Software enthaltenen Regressionswerkzeuge aus einer Regression der Messdaten mit der vorstehenden Gleichung. Dies kann bereits aus den bei der ersten Quellung, also der bei dem höchsten Druck ermittelten Messpunktreihe berechnet werden.

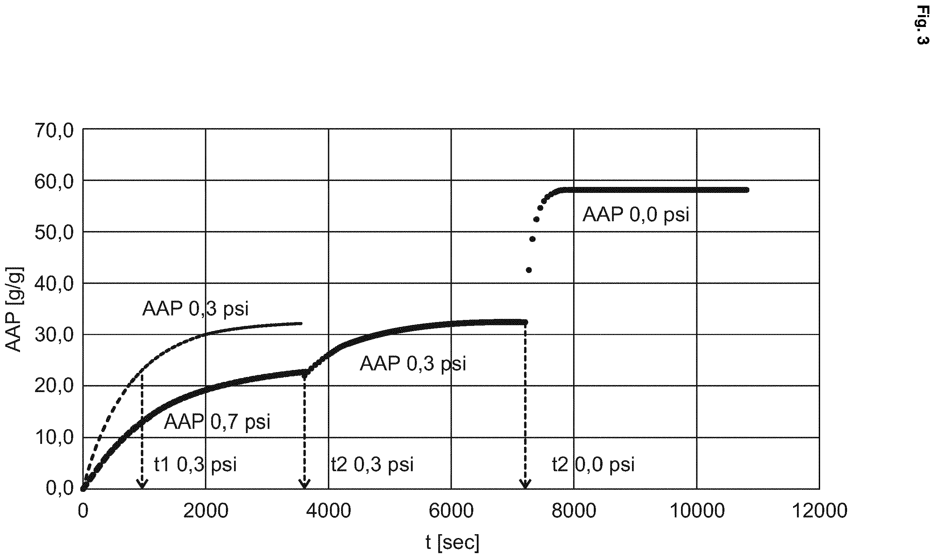

Auch die bei jeweils niedrigerem Druck gemessenen Daten können nach dem gleichen Prinzip ausgewertet werden. Die Einzelkurven werden dazu nach der Gleichung $Q(t) = Q_{max} (1-e^{-(t-t2+t1)/\tau}$ > in ihre einzelnen Abschnitte - einer je Druckstufe - zerlegt. Dabei sind wie oben $Q(t)$ die Flüssigkeitsaufnahme des Superabsorbers zum Zeitpunkt t und $Q_{max}$ die maximale Flüssigkeitsaufnahme des Superabsorbers bei einem gegebenen Druck, k die Quellkonstante und $\tau$ die charakteristische Quellzeit sowie t2 die Zeit beim Erniedrigen des Gewichts. Die Zeit t1 ist die virtuelle Startzeit für den jeweils folgenden Abschnitt der Messkurve, der ohne Gewichtsänderung das zum Zeitpunkt t2 erreichte absorbierte Volumen ergäbe. So werden für den untersuchten Superabsorber die charakteristischen Parameter sowie die zugehörigen $\tau$-Werte für die jeweiligen Kurvenabschnitte bestimmt. Ein Beispiel einer derartigen Auswertung ist für die Messung nach der ersten Gewichtserniedrigung in Figur 3 verdeutlicht. Fig. 3 zeigt die Messwerte einer Probe bei der erfindungsgemäßen AAP-Bestimmung mit Gewichten, die zur Bestimmung einer AAP 0,7 psi (4826 Pa; erster Abschnitt, t = 0 bis 3600 s), AAP 0,3 psi (2068 Pa; mittlerer Abschnitt, t = 3600 bis 7200 s) und AAP 0,0 psi (0,0 Pa; letzter Abschnitt, t = 7200 bis 10800 s) führen. Die Zeit t2 0,3 psi (2068 Pa) ist der Zeitpunkt der ersten Erniedrigung des Gewichts, also der tatsächliche Beginn der Messung der AAP 0,3 psi (2068 Pa). Die Zeit t1 0,3 psi (2068 Pa) ist der (virtuelle) Zeitpunkt, an dem bei einer Messung allein der AAP 0,3 psi (2068 Pa) dieselbe Flüssigkeitsmenge aufgenommen worden wäre wie sie in der hier vorgenommenen Messung zum Zeitpunkt t2 0,3 psi (2068 Pa) bereits aufgenommen war. Damit kann der Teil einer Messkurve einer reinen AAP 0,3 psi(2068 Pa)-Messung der hier aufgrund der vorherigen Messung der AAP 0,7 psi (4826 Pa) fehlt, rechnerisch ergänzt und die gesamte Kurve ausgewertet werden. Für weitere Abschnitte der Messkurve erfolgt dies analog. Die bei niedrigerem Druck als dem der ersten Druckstufe gemessenen Kurvenabschnitte werden also durch Regression mit der obigen Formel um den Teil der jeweiligen Kurve ergänzt, der gegenüber einer bereits ab Beginn bei der jeweiligen Druckstufe gemessenen Kurve fehlt und nach links zum Nullpunkt von AAP und t verschoben. Die so erhaltenen Kurven für die einzelnen Druckstufen entsprechen den Kurven, die bei getrennter einzelner Messung bei den einzelnen Druckstufen erhalten würden und können ebenso ausgewertet werden.

Im erfindungsgemäßen Verfahren wird ausgenutzt, dass ein quellender Superabsorber bei stufenweiser Verringerung des die Quellung begrenzenden externen Drucks eine charakteristische Quellkurve analog der in Fig. 3 dargestellten erzeugt, deren Form und Eigenschaften mit anderen und nur umständlich ermittelbaren, insbesondere von der Permeabilität des Superabsorbers abhängigen Kenngrößen des Superabsorbers korreliert. Dies erlaubt eine relativ einfache Automatisierung der Messung zur indirekten Ermittlung der gesuchten Kenngrößen. Die Korrelation der gesuchten Kenngrößen kann dabei auch über Bildanalysen der erfindungsgemäß gemessenen Quellkurven erfolgen.

Bei der erfindungsgemäß zu bestimmenden Kenngröße handelt es sich beispielsweise um die Zeit für die Quellung einer Schicht von Superabsorberpartikeln um einen bestimmten Wert. Derartige Kenngrößen werden in der EP 2 535 027 A1 auf den Seiten 13 bis 18 beschriebenen Testmethode "K(t) Test Method (Dynamic Effective Permeability and Uptake Kinetics Measurement Test Method)" als T5-, T10- und T20-Werte beschrieben. Ein weiteres Beispiel einer erfindungsgemäß zu bestimmenden Kenngröße ist die Permeabilität des Superabsorbers, wie sie etwa als SFC (Saline Flow Conductivity) bestimmt werden kann.

Eine weitere mögliche, besonders einfache und bevorzugte Basis eines Auswerteverfahrens für die Praxis ist der Betrag der Differenz zwischen der erfindungsgemäß gemessenen Absorptionskapazität bei zwei unterschiedlichen Drücken. Bevorzugt ist die Verwendung des Betrags der Differenz zwischen der Absorptionskapazität bei einem von Null verschiedenen Druck und ohne Druck. Die Absorptionskapazität bei niedrigerem Druck ist in aller Regel höher als die bei höherem Druck, so dass der Betrag durch Subtraktion der Absorptionskapazität bei höherem Druck von der bei niedrigerem Druck ermittelt wird. Beispielsweise wird demnach die Differenz zwischen der AAP 0,0 psi (0,0 Pa) und mindestens einer weiteren, unter höherem Druck gemessenen AAP, beispielsweise der AAP 0,3 psi (2068 Pa) oder AAP 0,7 psi (4826 Pa) ermittelt. Dieser Betrag der Differenz kann in vielen Fällen einfach mit einer gesuchten Kenngröße linear oder nicht-linear korreliert werden. Diese Absorptionskapazität eines Superabsorbers bei unterschiedlichen Drücken und damit auch der Betrag ihrer Differenz lässt sich leicht und mit guter Präzision ermitteln, während die direkte Bestimmung einer gesuchten Kenngröße deutlich mehr experimentellen Aufwand und Kosten erfordern kann. Die hohe Präzision der Bestimmung der Absorptionskapazität bei unterschiedlichen Drücken und des Betrags von deren Differenz ist auch durch die Weiterverwendung derselben Superabsorberprobe über alle Druckstufen hinweg bedingt, da nur das Gewicht geändert, aber nicht die zu messende Probe ausgetauscht wird wie es in üblichen Messverfahren der Fall wäre.

Die Korrelation (Eichkurve) zwischen Kenngröße und Quellkonstante k oder charakteristischer Quellzeit τ oder Betrag der Differenz der Absorptionskapazität bei zwei unterschiedlichen Drücken wird ermittelt, indem von mindestens drei Superabsorbern mit unterschiedlicher Permeabilität die Kenngröße gemessen und zusätzlich die Quellkonstante k oder die charakteristische Quellzeit τ oder der Betrag der Differenz der Absorptionskapazität bei zwei unterschiedlichen Drücken ermittelt wird. Die Genauigkeit der Korrelation kann durch Erhöhung der gemessenen Anzahl an Superabsorbern unterschiedlicher Permeabilität erhöht werden. Die Auswertung kann graphisch mittels einer Ausgleichsgerade erfolgen oder mittels eines Computerprogramms.

Die Kenngröße der zur Erstellung der Korrelation verwendeten Superabsorber sollte einen Bereich von vorzugsweise ±10%, besonders bevorzugt ±25%, ganz besonders bevorzugt ±50%, vom Mittelwert abdecken. Wenn die Kenngröße mit der Permeabilität zusammenhängt und dem gemäß Superabsorber unterschiedlicher Permeabilität zur Ermittlung der Korrelation verwendet werden sollen, können solche Superabsorber unterschiedlicher Permeabilität durch Variation der Menge an Oberflächennachvernetzer bei der Oberflächennachvernetzung hergestellt werden. Sie sollten im Übrigen möglichst große strukturelle Ähnlichkeiten aufweisen, insbesondere aus demselben Herstellverfahren stammen, also alle aus einem Kneter- oder Vertropfungs- oder Suspensions- oder Bandpolymerisationsverfahren samt vergleichbarer Nachbehandlung. Die Oberflächennachvernetzung wird beispielsweise in der Monographie "Modern Superabsorbent Polymer Technology", F.L. Buchholz und A.T. Graham, Wiley-VCH, 1998, Seiten 97 bis 101, beschrieben.

Der vorliegenden Erfindung liegt die Erkenntnis zugrunde, dass es einen Zusammenhang zwischen der Quellkonstante k bzw. der charakteristischen Quellzeit τ und von der Permeabilität abhängiger Kenngrößen gibt. Der vorliegenden Erfindung liegt auch die weitere Erkenntnis zugrunde, dass es ebenso einen Zusammenhang zwischen dem Betrag der Differenz der unter verschiedenen Drücken ermittelten AAP-Werte und der Permeabilität oder mit der Permeabilität zusammenhängenden Kenngrößen gibt.

Die Permeabilität beschreibt die Durchlässigkeit gequollener Superabsorberschichten für wässrige Lösungen. Eine hohe Permeabilität der Superabsorber ist für Windeln mit einem hohen Anteil an Superabsorbern wichtig. Die Permeabilität kann beispielsweise als Flüssigkeitsweiterleitung (SFC) oder Gelbettpermeabilität (GBP) gemessen werden.

Die Quellung von Superabsorberschichten wird immer von der Permeabilität des verwendeten Superabsorbers mit beeinflusst. Eine wenig permeable Superabsorberschicht behindert den Durchtritt von wässriger Lösung und damit die vollständige Quellung des Superabsorbers. Eine derartige Kenngröße ist beispielsweise die Flüssigkeitsaufnahme von 20 g/g (T20) gemäß der in der EP 2 535 027 A1 auf den Seiten 13 bis 18 beschriebenen Testmethode "K(t) Test Method (Dynamic Effective Permeability and Uptake Kinetics Measurement Test Method)".

Die einzelnen Schritte des Messverfahrens lassen sich leicht automatisieren. Weiterhin ermöglicht das Messverfahren die gleichzeitige Messung weiterer Kenngrößen des Superabsorbers mit einer einzigen Messung. Somit ermöglicht das erfindungsgemäße Verfahren eine kostengünstige Routineanalytik, insbesondere bei der kontinuierlichen Herstellung von Superabsorbern.

Eine weitere Kenngröße, die sich durch erfindungsgemäße Korrelation leicht aus erfindungsgemäß ermittelten Werten der Absorptionskapazität bestimmen lässt, ist die Gelstärke. Für die Modellierung des Quellverhaltens eines Superabsorbers hat sich das von F.L. Buchholz aufgestellte und bekannte physikalische Modell bewährt (s. "Modern Superabsorbent Polymer Technology", F.L. Buchholz und A.T. Graham, Wiley-VCH, 1998). In diesem Modell ist die Gelstärke des ohne äußeren Druck vollständig gequollenen Gels ("Gel Strength", kurz $G_e$) ein zentraler Wert. Die Gelstärke ($G_e$) ist ein Maß für die Steifigkeit des ohne äußeren Druck vollständig gequollenen Gels, also beim theoretischen maximalen Quellgrad $Q_e$. Der Quellgrad $Q_e$ wird erst nach unendlich langer Quellzeit erreicht, so dass in der Praxis in guter Näherung stattdessen die CRC verwendet wird. Bei sehr langsam quellenden Superabsorbern, bei denen nach den üblichen 30 Minuten Messdauer noch kein stabiler Endwert der CRC erreicht ist, kann die CRC zu diesem Zweck auch mit mehr als 30 min Quellzeit gemessen werden.

Alternativ können CRC und Quellgrad auch gemäß der in WO 2019/162216 A1 offenbarten Methode bestimmt werden. Vor einem Vergleich mit verschiedenen Methoden bestimmter CRC und Quellgrad-Werte ist zu prüfen, ob in der praktischen Ausführung dieser Methoden auch untereinander konsistente Werte erhalten werden, vorzugsweise werden in Vergleiche nur mit derselben Methode bestimmte Werte einbezogen.

Leider ist $G_e$ dennoch experimentell nicht einfach bestimmbar, so dass dieser Wert üblicherweise anhand einer Serie klassischer Messungen von CRC, AAP 0,0 psi, AAP 0,3 psi und AAP 0,7 psi ermittelt wird. Dabei wird $G_e$ aus diesen vielen Messwerten in Anwendung der entsprechenden Gleichungen des Modells von Buchholz mittels nicht-linearer Regression berechnet. Dazu müssen die genannten Parameter für jeden Superabsorber manuell und vorschriftsgemäß mindestens als Doppelbestimmung gemessen werden. Dies ist aufwendig und da für jede Messung eine neue kleine Probe gezogen werden muss, außerdem unnötig fehleranfällig. Die Bestimmung der Gelstärke mittels der erfindungsgemäßen Methode gelingt dagegen lediglich durch Messung der CRC und der erfindungsgemäßen Messung der Absorptionskapazität (AAP) bei verschiedenen Drücken von mindestens zwei Proben, da erfindungsgemäß die AAP-Werte bei unterschiedlichen Drücken an derselben Probe gemessen werden. Zusätzlich werden erfindungsgemäß auch die charakteristischen Quellzeiten als Ergebnis erhalten. Erfindungsgemäß kann die Gelstärke ($G_e$) anschließend aus einer einfachen linearen Regression der einmal an Hand von Vergleichsproben auf vorbekanntem Weg ermittelten Gelstärke ($G_e$) gegen die Differenz der erfindungsgemäß gemessene AAP 0,0 psi und der erfindungsgemäß gemessenen AAP 0,7 psi ermittelt werden.

Für die Modellierung und Berechnung nach Buchholz wird außerdem der Wert der ohne äußeren Druck vor-liegenden Gelbettporosität ($\Phi_0$) beim endgültigen Quellgrad ($Q_e$, wiederum in der Praxis üblicherweise durch die CRC ersetzt) benötigt. Diese lässt sich beispielsweise mit: $\Phi_0$ = (AAP 0.0 psi - CRC) / AAP 0.0 psi abschätzen. Sie ist ein Maß für den Volumenanteil offener Poren im gequollenen Gel, die zur Weiterleitung in das bereits gequollene Gelbett eintretender Flüssigkeit zur Verfügung stehen.

Bevorzugterweise wird zur Erstellung einer Korrelation zur Bestimmung von Kenngrößen mehr als ein erfindungsgemäß bestimmter Parameter in einer multiplen linearen Regressionsformel verwendet. Die Permeabilität eines gequollenen Superabsorbers hängt auch von dessen Kornform und Korngrößenverteilung ab. Die Verwendung mehrerer Parameter in einer multiplen linearen Regression erlaubt es daher, Kenngrößen wie die SFC dennoch mit hoher Genauigkeit vorherzusagen. In bevorzugter Form werden dazu sowohl Beträge gemessener Differenzen von Absorptions-kapazitäten und/oder Quellzeiten $\tau$ eingesetzt. Man erhält so universell einsetzbare mathematische Modelle, die nicht von einer bestimmten Kornform oder Korngrößenverteilung abhängen.

Multiple lineare Regression ist bekannt. Ein Beispiel eines für die erfindungsgemäße Analyse der erfindungsgemäß ermittelten Daten geeigneten Programms ist etwa die Programmiersprache R, die in der aktuellen Version 3.6.1 (2019-07-05) unter Open Source Lizenz von "The R Foundation for Statistical Computing" (www.r-project.org) erhältlich ist. Für den nicht-linearen Fit der Teilkurven nach Kurvenzerlegung - wie in Fig. 3 dargestellt - kann in R die Funktion nlm() in Kombination mit dem "mean abolute error" (MAE) über alle Messpunkte verwendet werden. Ein geeignetes multiples lineares Modell kann in R mittels der Funktion lm() berechnet werden. Eine Übersicht zur multiplen linearen Regression mit R findet sich beispielsweise in "R in Action", 2nd Edition, Robert I. Kabacoff, Manning Publications Co. - Shelter Island NY, ISBN 9781617291388, Kapitel 8. Der MAE ist dort auf Seite 355 erläutert. Die Erläuterung der Funktionen nlm() und lm() können auch in R über die Hilfefunktion des Programms aufgerufen werden.

Vorteilhaft ist für die Analyse die Minimierung des mittleren absoluten Fehlers (MAE = mean absolute error) der nicht-linearen Fit-Funktion der in Fig. 3 schematisch dargestellten Kurven in Bezug auf die Abweichung der gemessenen Werte von den durch die Fit-Funktion errechneten Werten zu gleicher Messzeit.

Ein weiterer Gegenstand der vorliegenden Erfindung ist die Verwendung des erfindungsgemäßen Verfahrens zur Qualitätskontrolle bei der kontinuierlichen Herstellung von Superabsorbern.

Ein weiterer Gegenstand der vorliegenden Erfindung ist die Verwendung des erfindungsgemäßen Verfahrens zur Charakterisierung eines Superabsorbers bei der Entwicklung neuer Superabsorber.

Ein weiterer Gegenstand der vorliegenden Erfindung ist eine Messvorrichtung zur automatisierten Durchführung von Messungen nach dem erfindungsgemäßen Verfahren, die dadurch gekennzeichnet ist, dass ein den Druck ausübendes Gewicht durch einen Roboterarm ausgetauscht oder damit ein für die vorherige, höhere Druckstufe verwendetes Zusatzgewicht abgenommen wird oder dass ein mechanisch, hydraulisch oder elektrisch angetriebener Stempel mit einer entsprechenden Gewichtskraft auf die Messzelle drückt.

Testmethoden

Die folgenden, mit "NWSP" bezeichneten Standard-Testmethoden werden beschrieben in: "Nonwovens Standards Procedures", Ausgabe 2015, gemeinsam herausgegeben von EDANA (European Disposables and Nonwovens Association, Avenue Herrmann Debroux 46, 1160 Brüssel, Belgien, www.edana.org) und INDA (Association of the Nonwoven Fabrics Industry, 1100 CrescentGreen, Suite 115, Cary, North Carolina 27518, U.S.A., www.inda.org). Diese Veröffentlichung ist sowohl von EDANA als auch von INDA erhältlich.

Zentrifugenretentionskapazität (CRC, Centrifuge Retention Capacity)

Die Zentrifugenretentionskapazität des Superabsorbers wird gemäß der Standard-Testmethode Nr. NWSP 241.0 R2 (15) "Gravimetric Determination of the Fluid Retention Capacity in Saline Solution after Centrifugation" bestimmt.

Korngrößenverteilung

Die Korngrößenverteilung des Superabsorbers wird gemäß der Standard-Testmethode Nr. NWSP 220.0 R2 (15) "Determination of the Particle Size Distribution by Sieve Fractionation" bestimmt.

Fließrate (FLR, Flow Rate) und Schüttdichte (ABD, Apparent Bulk Density)

Fließrate und Schüttdichte werden gemäß der Standard-Testmethode Nr. NWSP 251.0.R2 (15) "Gravimetric Determination of Flow Rate and Bulk Density" bestimmt.

Permeabilität (SFC, "Saline Flow Conductivity")

Die Permeabilität einer vom Superabsorber durch Flüssigkeitsabsorption gebildeten gequollenen Gelschicht wird unter Druckbelastung von 0.3 psi (2068 Pa), wie in EP 0 640 330 A1 beschrieben, als Gel-Layer-Permeability einer gequollenen Gelschicht aus Superabsorberpartikeln bestimmt, wobei die in zuvor genannter Patentanmeldung auf deren Seite 19 und in deren Figur 8 beschriebene Apparatur dahingehend modifiziert ist, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1, mit Ausnahme der Einwaage des Superabsorbers: statt 0,9 g werden 1,5 g Probe pro Messung eingesetzt. Der Durchfluss wird automatisch erfasst.

Die Permeabilität (SFC) wird wie folgt berechnet:

$$ \text{SFC [cm}^3\text{s/g]} = (F_g(t=0) \cdot L0)/(d \cdot A \cdot WP), $$

wobei $F_g(t=0)$ der Durchfluss an NaCl-Lösung in g/s ist, der anhand einer linearen Regressionsanalyse der Daten $F_g(t)$ der Durchflussbestimmungen durch Extrapolation gegen t=0 erhalten wird, L0 die Dicke der Gelschicht in cm, d die Dichte der NaCl-Lösung in $g/cm^3$, A die Fläche der Gelschicht in $cm^2$ und WP der hydrostatische Druck über der Gelschicht in $dyn/cm^2$ darstellt.

Beispiele

Beispiel 1: Bestimmung von SFC und T20-Werts eines unterschiedlich stark oberflächennachvernetzten Superabsorbers

Gesuchte Kenngrößen im Beispiel 1 sind SFC und T20-Wert. Diese Größen sind von der Permeabilität des Superabsorbers abhängig. Unterschiedliche Permeabilität wurde hier durch unterschiedlich vollständige Oberflächennachvernetzung eines Superabsorbers erzeugt.

Eingesetzt wurde ein handelsübliches Polyacrylat-Superabsorber-Grundpolymer mit den folgenden Eigenschaften:

CRC: 34,2 g/g
AAP 0,3 psi: 15,6 g/g (gemessen nach NWSP 242.0.R2 (15))

(fortgesetzt)

ABD: 0,59 g/cm$^3$

FLR: 9,86 g/sec

Korngrößenverteilung:

| | |
|---|---|
| >850 $\mu$m: | 0 Gew.-% |
| 710 - 850 $\mu$m: | 0,7 Gew.-% |
| 600 - 710 $\mu$m: | 6,0 Gew.-% |
| 500 - 600 $\mu$m: | 18,5 Gew.-% |
| 400 - 500 $\mu$m: | 29,2 Gew.-% |
| 300 - 400 $\mu$m: | 22,6 Gew.-% |
| 200 - 300 $\mu$m: | 15,1 Gew.-% |
| 150 - 200 $\mu$m; | 6,7 Gew.-% |
| <150 $\mu$m: | 1,2 Gew.-% |

Dieses Grundpolymer wurde wie folgt oberflächennachvernetzt:

1196 g des Grundpolymers wurden in einem Schaufeltrockner mit 5 l Volumen, Typ M5RMK von Gebr. Lödige Maschinenbau GmbH; Elsener Straße 7-9, 33102 Paderborn, Deutschland, vorgelegt und mit 200 Umdrehungen pro Minute gerührt. Mittels einer Zweistoffdüse wurde eine Lösung aus 0,07 Gew.-% N-Hydroxyethyl-2-oxazolidon, 0,532 Gew.-% Isopropanol, 2,128 Gew.-% Wasser, 0,07 Gew.-% 1,3-Propandiol, 0,70 Gew.-% 1,2-Propandiol und 0,50 Gew.% Aluminiumlaktat, jeweils auf das Gewicht des vorgelegten Grundpolymers bezogen, binnen 62 Sekunden auf das gerührte Polymer aufgesprüht.

Das so besprühte Grundpolymer wurde in einen Pflugschar®-Mischer mit 5 l Volumen, Typ VT M5R, mit Heizmantel von Gebr. Lödige Maschinenbau GmbH; Elsener Straße 7-9, 33102 Paderborn, Deutschland überführt. Zur Messung der Temperatur des Produkts im Mischer wurde ein Thermoelement in die am Mischer dafür vorgesehene Öffnung so weit eingeführt, dass seine Spitze zwar von der beheizten Innenwand des Mischers beabstandet war und sich im Produkt befand, aber nicht von den Mischwerkzeugen erfasst werden konnte. Das Polymer wurde mit 50 Umdrehungen pro Minute gerührt. Der Heizmantel des Mischers wurde mit extern auf 250 °C aufgeheiztem Öl durchströmt. Das Produkt erreichte nach ca. 15 Minuten die gewünschte Reaktionstemperatur von 175 - 184 °C und wurde dabei oberflächennachvernetzt. Nach vorgegebenen Reaktionsdauern -gemessen ab dem Zeitpunkt der Produktüberführung in den beheizbaren Mischer - wurden Proben entnommen und mittels eines 700 um-Siebes von Klumpen befreit.

Die Proben wurden analysiert. Die AAP-Werte wurden erfindungsgemäß ermittelt, wobei im Grundsatz analog NWSP 242.0.R2 (15) vorgegangen wurde (0,90 g Einwaage, Messzelle mit 60 mm Durchmesser). Allerdings wurde nach 60 Minuten Messdauer zur Ermittlung der AAP 0,7 psi das Gewicht reduziert, so dass nach der AAP 0,7 psi (4826 Pa) -wiederum über 60 Minuten Messdauer - die AAP 0,3 psi (2068 Pa) bestimmt wurde. Danach wurde das Gewicht abgenommen, so dass nach der AAP 0,3 psi (2068 Pa) -wiederum über 60 Minuten Messdauer- die AAP 0,0 psi (0,0 Pa) bestimmt wurde. Weiterhin wurde eine Unterkonstruktion wie in Fig. 1 dargestellt verwendet, mit einer 6 mm dicken Plexiglas-Lochplatte von 89,5 mm Durchmesser und mit 52 in konzentrischen Kreisen angeordneten Bohrungen von je 2 mm Durchmesser. Auf das zwischen Lochplatte und Messzelle anzuordnende Filterpapier wurde verzichtet, stattdessen wurde ein Schwarzband-Filterpapier auf die Probe in der Messzelle gelegt. Der verwendete Stempel war an seiner Unterseite mit parallelen, 2 mm breiten und tiefen und 2 mm voneinander beabstandeten Rillen versehen. Die Versorgung der Messzelle mit physiologischer Kochsalzlösung erfolgte über eine durch eine Kapillare belüftete Vorratsflasche über einen 6mm-Silikonschlauch und die absorbierte Flüssigkeitsmenge wurde als Funktion der Messzeit mittels einer Waage bestimmt, auf der die Vorratsflasche stand. Bestimmt wurden die AAP-Werte des Superabsorbers als absorbierte Flüssigkeitsmasse am Ende der Messzeit, angegeben ist jeweils der Mittelwert einer zweifachen Messung.

Die SFC-Werte der Proben wurden wie oben beschrieben bestimmt und die T20-Werte mit der in EP 2 535 027 A1 auf den Seiten 13 bis 18 beschriebenen Testmethode "K(t) Test Method (Dynamic Effective Permeability and Uptake Kinetics Measurement Test Method)".

Die Ergebnisse sind in Tabelle 1 zusammengefasst.

Tabelle 1

| Reaktionsdauer [min] | AAP 0,7 psi [g/g] | AAP 0,3 psi [g/g] | AAP 0,0 psi [g/g] | AAP 0,0 psi - AAP 0,7 psi | SFC [$10^{-7}$ cm$^3$s/g] | T20 [s] |
|---|---|---|---|---|---|---|
| 25 | 11,9 | 26,1 | 50,4 | 38,5 | 0 | 1185 |
| 30 | 20,7 | 28,2 | 50,0 | 29,3 | 0 | 258 |
| 35 | 24,9 | 30,1 | 49,8 | 24,9 | 5 | 182 |
| 40 | 24,8 | 30,0 | 47,3 | 22,5 | 29 | 168 |
| 45 | 25,3 | 30,3 | 46,9 | 21,6 | 47 | 161 |
| 50 | 25,3 | 29,9 | 46,0 | 20,7 | 66 | 179 |

Tabelle 1 zeigt, wie die Oberflächennachvernetzungsreaktion über die Reaktionsdauer voranschreitet und die Permeabilität des Superabsorbers dadurch steigt (erhöhte SFC und verringerte T20). Tabelle 1 zeigt aber auch im Bereich, in dem tatsächlich messbare Permeabilität (als SFC gemessen) vorliegt, eine lineare Korrelation zwischen SFC und dem Betrag der Differenz von AAP 0,0 psi (0,0 Pa) und AAP 0,7 psi (4826 Pa) (= AAP 0,0 psi (0,0 Pa) minus AAP 0,7 psi (4826 Pa)). Bei der T20 zeigt sich ebenfalls eine Korrelation zu diesem Betrag der AAP-Differenz, soweit der Superabsorber seinen T20-Endwert noch nicht erreicht hat. Mit dem erfindungsgemäßen Verfahren lässt sich anhand so ermittelter Korrelationen für Typen von Superabsorbern demnach die aufwendige Bestimmung von Werten wie SFC oder T20 (oder auch anderen vergleichbaren Werten) durch die leicht automatisierbare erfindungsgemäße Bestimmung von AAP-Werten ersetzen.

Beispiel 2: Bestimmung der Kenngröße SFC an verschiedenen Superabsorbern

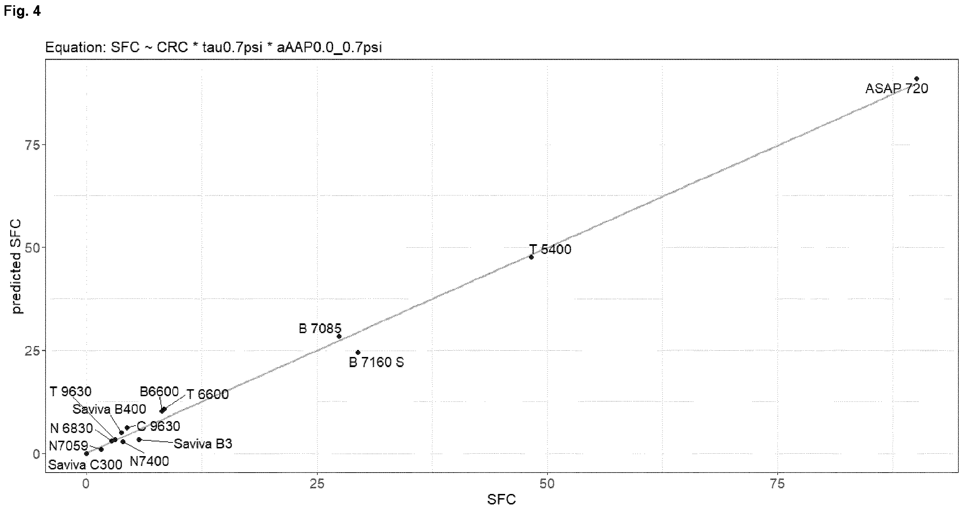

Für die in Tabelle 2 aufgeführten unterschiedlichen Superabsorber (sämtlich erhältlich bei BASF SE, Carl-Bosch-Straße 38, 67056 Ludwigshafen, Deutschland) wurden so wie in Beispiel 1 beschrieben Quellkurven wie schematisch in Fig. 3 dargestellt ermittelt, wobei jedoch die Reduzierung des Gewichts durch Wegnahme von Teilgewichte mittels eines Roboterarms vorgenommen wurde. Von allen Proben wurden weiterhin zusätzlich CRC und SFC auf vorbekanntem, oben beschriebenem Weg gemessen, die SFC hier jedoch mit 0,9 g Probeneinwaage.
Die ermittelten Werte sind in Tabelle 2 zusammengestellt. "aAAP" steht für die erfindungsgemäß ermittelte AAP beim angegebenen Druck und $\tau$ mit Angabe eines Druckwerts für die aus derselben Messung ermittelte charakteristische Quellzeit beim angegebenen Druck.
Die Daten wurden mit dem oben beschriebenen Programm R ausgewertet und aus der auf vorbekannte Weise bestimmten CRC, der erfindungsgemäß bestimmten AAP 0,7 psi und der erfindungsgemäß aus der bei Quellung für die Messung der AAP 0,7 psi bestimmten Quellzeit $\tau$ 0,7psi eine mit der gemessenen SFC korrelierte SFC berechnet. Die für die Berechnung dieser "predicted SFC" in Tabelle 2 verwendete Formel ist: SFC ~ CRC * (aAAP 0,0 psi - aAAP 0,7 psi) * $\tau$ 0.7psi. Die ermittelte Korrelation ist in Fig. 4 dargestellt. Der Korrelationskoeffizient r$^2$ ist 0,99. (Mit ähnlich gutem Korrelationskoeffizient (r$^2$ = 0,97) lässt sich die Korrelation bei Ersatz der hier verwendeten Quellzeit $\tau$ 0,7 psi durch die Quellzeit $\tau$ 0,3 psi ermitteln). Mit Korrelationskoeffizient r$^2$ ist hier und im Folgenden stets der "adjusted r$^2$" des Programms R gemeint.
Beispiel 2 zeigt, dass Kenngrößen wie hier die SFC auch bei unterschiedlichen Superabsorbern mit stark oder sogar sehr stark unterschiedlichen Eigenschaften erfindungsgemäß gut und mit verglichen mit vorbekannten SFC-Messungen minimalem Aufwand routinemäßig und automatisiert ermittelt werden können.

Beispiel 3: Bestimmung der "Gel Strength" $G_e$

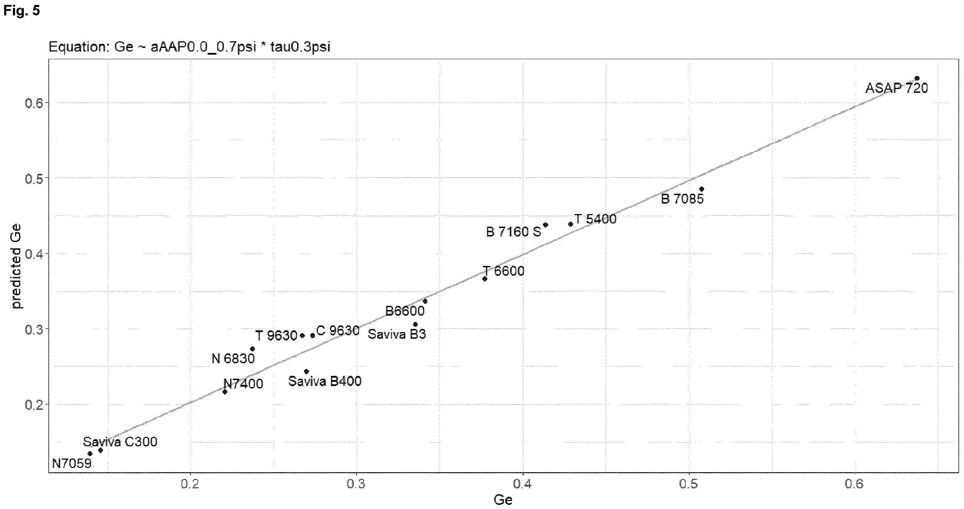

Für die in Beispiel 2 verwendeten Superabsorber wurden die zur Berechnung der Gelstärke $G_e$ und der Gelbettporosität $\Phi_0$ auf vorbekanntem Weg nach Buchholz notwendigen Eigenschaften mit vorbekannter Methodik manuell gemessen. Tabelle 3 gibt eine Übersicht über die Werte.
Aus den erfindungsgemäß bestimmten Werten dieser Superabsorber wurden erfindungsgemäß durch Korrelation Werte von Gelstärke $G_e$ und der Gelbettporosität $\Phi$o ermittelt. Diese Werte sind in Tabelle 4 wiedergegeben. Die in R verwendete Formel war $G_e$ ~ (aAAP 0,0 psi - aAAP 0,7 psi) * $\tau$ 0,3 psi. Abbildung 5 zeigt die Korrelation. Der Korrelationskoeffizient r$^2$ beträgt 0,97.
Beispiel 3 zeigt, dass auch mit vorbekannter Methodik nur umständlich zugängliche Kenngrö-βen wie die Gelstärke erfindungsgemäß recht einfach bestimmt werden können.

Tabelle 2

| Superabsorber | CRC | aAAP 0,0 psi | aAAP 0,3 psi | aAAP 0,7 psi | aAAP 0,0 psi - aAAP 0,7 psi | $\tau$ 0.3 psi | $\tau$ 0.7psi | SFC | predicted SFC |
|---|---|---|---|---|---|---|---|---|---|
| | [g/g] | [g/g] | [g/g] | [g/g] | [g/g] | [sec] | [sec] | [$10^{-7}$ $cm^3s/g$] | [$10^{-7}$ $cm^3s/g$] |
| HySorb® C 9630 | 33,6 | 49,7 | 28,9 | 21,3 | 28,4 | 1087 | 544 | 4 | 6 |
| HySorb® T 9630 | 35,0 | 52,0 | 30,3 | 23,0 | 29,0 | 1050 | 484 | 3 | 3 |
| HySorb® T 6600 | 33,9 | 48,8 | 29,2 | 22,9 | 25,9 | 1031 | 400 | 8 | 11 |
| HySorb® B 7085 | 30,1 | 44,2 | 28,8 | 23,2 | 21,1 | 1007 | 526 | 27 | 28 |
| HySorb® B 7160 S | 31,9 | 45,4 | 28,3 | 22,3 | 23,1 | 1012 | 428 | 29 | 25 |
| HySorb®B6600 | 34,4 | 47,0 | 28,4 | 21,8 | 25,3 | 1138 | 434 | 8 | 10 |
| ASAP® 720 | 26,8 | 47,2 | 30,4 | 25,7 | 21,6 | 682 | 206 | 90 | 91 |
| HySorb® T 5400 | 27,4 | 49,0 | 29,0 | 23,0 | 26,0 | 842 | 168 | 48 | 48 |
| HySorb® N 6830 | 34,4 | 51,9 | 29,1 | 21,7 | 30,1 | 1030 | 520 | 3 | 3 |
| HySorb® N7400 | 35,9 | 53,1 | 29,9 | 21,5 | 31,6 | 1114 | 600 | 4 | 3 |
| HySorb® N7059 | 38,7 | 53,5 | 27,0 | 19,0 | 35,0 | 1174 | 591 | 2 | 1 |
| SAVIVAO C300 | 40,2 | 55,9 | 28,4 | 18,1 | 37,7 | 773 | 771 | 0 | 0 |
| SAVIVAO B3 | 38,1 | 53,2 | 32,9 | 25,1 | 28,1 | 1063 | 592 | 6 | 3 |
| SAVIVA® B400 | 41,7 | 57,8 | 35,0 | 26,5 | 31,2 | 1047 | 734 | 4 | 5 |

Tabelle 3

| Superabsorber | CRC | AAP 0,0 psi | AAP 0,3 psi | AAP 0,7 psi | $\Phi_0$ | $G_e$ |
|---|---|---|---|---|---|---|
| | [g/g] | [g/g] | [g/g] | [g/g] | | [psi] |
| HySorb® C 9630 | 33,6 | 47,7 | 29,6 | 20,0 | 0,30 | 0,27 |
| HySorb® T 9630 | 35,0 | 48,7 | 30,7 | 20,2 | 0,28 | 0,27 |
| HySorb® T 6600 | 33,9 | 49,8 | 31,9 | 24,6 | 0,32 | 0,38 |
| HySorb® B 7085 | 30,1 | 39,7 | 28,7 | 23,4 | 0,24 | 0,51 |
| HySorb® B 7160 S | 31,9 | 41,7 | 29,0 | 23,0 | 0,24 | 0,41 |
| HySorb® B6600 | 34,4 | 46,7 | 31,0 | 22,8 | 0,26 | 0,34 |
| ASAP® 720 | 26,8 | 44,9 | 30,6 | 25,0 | 0,40 | 0,64 |
| HySorb® T 5400 | 27,4 | 45,9 | 28,7 | 21,5 | 0,40 | 0,43 |
| HySorb® N 6830 | 34,4 | 50,7 | 30,6 | 18,1 | 0,32 | 0,24 |
| HySorb® N7400 | 35,9 | 48,9 | 30,1 | 18,3 | 0,27 | 0,22 |

(fortgesetzt)

| Superabsorber | CRC | AAP 0,0 psi | AAP 0,3 psi | AAP 0,7 psi | $\Phi_0$ | $G_e$ |
|---|---|---|---|---|---|---|
| HySorb® N7059 | 38,7 | 49,4 | 28,6 | 14,4 | 0,22 | 0,14 |
| SAVIVAO C300 | 40,2 | 56,2 | 31,0 | 15,3 | 0,28 | 0,15 |
| SAVIVAO B3 | 38,1 | 50,7 | 33,4 | 25,4 | 0,25 | 0,34 |
| SAVIVA® B400 | 41,7 | 54,2 | 34,6 | 24,9 | 0,23 | 0,27 |

Tabelle 4

| Superabsorber | CRC | aAAP 0,0 psi | aAAP 0,7 psi | aAAP 0,0 psi - aAAP 0,7 psi | $\tau$ 0.3 psi | $\Phi_0$ | predicted $G_e$ |
|---|---|---|---|---|---|---|---|
| | [g/g] | [g/g] | [g/g] | [g/g] | [sec] | | [psi] |
| HySorb® C 9630 | 33,6 | 49,7 | 21,3 | 28,4 | 1087 | 0,30 | 0,29 |
| HySorb® T 9630 | 35,0 | 52,0 | 23,0 | 29,0 | 1050 | 0,28 | 0,29 |
| HySorb® T 6600 | 33,9 | 48,8 | 22,9 | 25,9 | 1031 | 0,32 | 0,37 |
| HySorb® B 7085 | 30,1 | 44,2 | 23,2 | 21,1 | 1007 | 0,24 | 0,49 |
| HySorb® B 7160 S | 31,9 | 45,4 | 22,3 | 23,1 | 1012 | 0,24 | 0,44 |
| HySorb® B6600 | 34,4 | 47,0 | 21,8 | 25,3 | 1138 | 0,26 | 0,34 |
| ASAP® 720 | 26,8 | 47,2 | 25,7 | 21,6 | 682 | 0,40 | 0,63 |
| HySorb® T 5400 | 27,4 | 49,0 | 23,0 | 26,0 | 842 | 0,40 | 0,44 |
| HySorb® N 6830 | 34,4 | 51,9 | 21,7 | 30,1 | 1030 | 0,32 | 0,27 |
| HySorb® N7400 | 35,9 | 53,1 | 21,5 | 31,6 | 1114 | 0,27 | 0,22 |
| HySorb® N7059 | 38,7 | 53,5 | 19,0 | 35,0 | 1174 | 0,22 | 0,13 |
| SAVIVAO C300 | 40,2 | 55,9 | 18,1 | 37,7 | 773 | 0,28 | 0,14 |
| SAVIVAO B3 | 38,1 | 53,2 | 25,1 | 28,1 | 1063 | 0,25 | 0,31 |
| SAVIVA® B400 | 41,7 | 57,8 | 26,5 | 31,2 | 1047 | 0,23 | 0,24 |

**Patentansprüche**

1. Verfahren zur Messung der Absorptionskapazität von Superabsorbern unter Druck, **dadurch gekennzeichnet, dass** der auf eine Probe des Superabsorbers angewendete Druck während der Messung stufenweise reduziert und jeweils die Absorptionskapazität beim vorliegenden Druck und ihre Abhängigkeit von der Messdauer bestimmt wird.

2. Verfahren nach Anspruch 1, wobei aus dem zeitlichen Verlauf der Absorption unter Druck die Quellkonstante k oder die charakteristische Quellzeit $\tau$ berechnet wird.

3. Verfahren nach Anspruch 1, wobei der Betrag der Differenz der Absorptionskapazität bei zwei unterschiedlichen Drücken bestimmt wird.

4. Verfahren nach Anspruch 3, wobei der Betrag der Differenz der Absorptionskapazität bei einem von Null verschiedenen Druck und ohne Druck bestimmt wird.

5. Verfahren nach einem der Ansprüche 2 bis 4, **dadurch gekennzeichnet, dass** aus der Quellkonstante k oder der charakteristischen Quellzeit $\tau$ oder der Differenz der Absorptionskapazität mindestens eine weitere Kenngröße des Superabsorbers mittels einer vorher gemessenen Korrelation zwischen Quellkonstante k, charakteristischer Quell-

zeit $\tau$ oder Betrag der Differenz der Absorptionskapazität und der Kenngröße berechnet wird.

6.  Verfahren nach Anspruch 5, **dadurch gekennzeichnet, dass** die Kenngröße der T20-Wert oder die Permeabilität (SFC) oder die Gelstärke $G_e$ ist.

7.  Verfahren nach Ansprüchen 1 bis 6, **dadurch gekennzeichnet, dass** der angewendete Druck zuerst 49 g/cm$^2$ beträgt und stufenweise auf 21 g/cm$^2$ und 0 g/cm$^2$ reduziert wird.

8.  Verfahren nach den Ansprüchen 1 bis 7, **dadurch gekennzeichnet, dass** die Zeit, über die der jeweilige Druck auf die Probe angewendet wird, mindestens 30 Minuten und längstens 90 Minuten beträgt.

9.  Verfahren nach einem der Ansprüche 1 bis 8, **dadurch gekennzeichnet, dass** die Menge an eingesetztem Superabsorber von 0,5 bis 5 g beträgt.

10. Verfahren nach Anspruch 9, **dadurch gekennzeichnet, dass** der Superabsorber eine kreisrunde Fläche mit einem Durchmesser von 5 bis 7 cm belegt.

11. Verfahren nach einem der Ansprüche 1 bis 10, **dadurch gekennzeichnet, dass** mindestens 95 Gew.-% des Superabsorbers eine Korngröße im Bereich von 100 $\mu$m bis 1000 $\mu$m aufweisen.

12. Verfahren nach einem der Ansprüche 1 bis 11, **dadurch gekennzeichnet, dass** der Superabsorber eine Flüssigkeitsweiterleitung (SFC) von mindestens 10 x 10$^{-7}$ cm$^3$s/g aufweist.

13. Verfahren nach einem der Ansprüche 1 bis 12, **dadurch gekennzeichnet, dass** der Superabsorber eine Zentrifugenretentionskapazität (CRC) von mindestens 10 g/g aufweist.

14. Verwendung des Verfahrens nach einem der Ansprüche 1 bis 13 zur Qualitätskontrolle bei der kontinuierlichen Herstellung von Superabsorbern.

15. Verwendung des Verfahrens nach einem der Ansprüche 1 bis 13 zur Charakterisierung eines Superabsorbers bei der Entwicklung neuer Superabsorber.

16. Vorrichtung zur automatisierten Durchführung des Verfahrens nach einem der Ansprüche 1 bis 13, **dadurch gekennzeichnet, dass** ein den Druck ausübendes Gewicht durch einen Roboterarm ausgetauscht oder damit ein für die vorherige, höhere Druckstufe verwendetes Zusatzgewicht abgenommen wird oder dass ein mechanisch, hydraulisch oder elektrisch angetriebener Stempel mit einer entsprechenden Gewichtskraft auf die Messzelle drückt.

**Claims**

1.  A method of measuring the absorption capacity of superabsorbents under pressure, which comprises reducing the pressure applied to a sample of the superabsorbent stepwise during the measurement and determining the absorption capacity at each pressure and the dependence thereof on the measurement duration.

2.  The method according to claim 1, wherein the progression of absorption under pressure against time is used to calculate the swelling constant k or the characteristic swelling time $\tau$.

3.  The method according to claim 1, wherein the magnitude of the difference in the absorption capacity at two different pressures is determined.

4.  The method according to claim 3, wherein the magnitude of the difference in the absorption capacity at a non-zero pressure and without pressure is determined.

5.  The method according to any of claims 2 to 4, wherein the swelling constant k or the characteristic swelling time $\tau$ or the difference in the absorption capacity is used to calculate at least one further parameter of the superabsorbent by means of a correlation measured beforehand between swelling constant k, characteristic swelling time $\tau$ or the magnitude of the difference in the absorption capacity and the parameter.

**6.** The method according to claim 5, wherein the parameter is the T20 value or the permeability (SFC) or gel strength $G_e$.

**7.** The method according to claims 1 to 6, wherein the pressure applied is 49 g/cm$^2$ at first and is reduced stepwise to 21 g/cm$^2$ and 0 g/cm$^2$.

**8.** The method according to claims 1 to 7, wherein the period over which the particular pressure is applied to the sample is at least 30 minutes and at most 90 minutes.

**9.** The method according to any of claims 1 to 8, wherein the amount of superabsorbent used is from 0.5 to 5 g.

**10.** The method according to claim 9, wherein the superabsorbent covers a circular area having a diameter of 5 to 7 cm.

**11.** The method according to any of claims 1 to 10, wherein at least 95% by weight of the superabsorbent has a grain size in the range from 100 $\mu$m to 1000 $\mu$m.

**12.** The method according to any of claims 1 to 11, wherein the superabsorbent has a saline flow conductivity (SFC) of at least 10 x 10$^{-7}$ cm$^3$s/g.

**13.** The method according to any of claims 1 to 12, wherein the superabsorbent has a centrifuge retention capacity (CRC) of at least 10 g/g.

**14.** The use of the method according to any of claims 1 to 13 for quality control in the continuous production of superabsorbents.

**15.** The use of the method according to any of claims 1 to 13 for characterization of a superabsorbent in the development of new superabsorbents.

**16.** An apparatus for automated performance of the method according to any of claims 1 to 13, which comprises exchanging a weight that exerts the pressure by means of a robot arm or using it to remove an added weight used for the previous, higher pressure stage, or pressing a mechanically, hydraulically or electrically driven plunger with a corresponding weight onto the test cell.

**Revendications**

**1.** Procédé de mesure de la capacité d'absorption de superabsorbants sous pression, **caractérisé en ce que** la pression appliquée sur un échantillon du superabsorbant est réduite par paliers pendant la mesure et la capacité d'absorption à la pression en vigueur et sa dépendance de la durée de mesure étant déterminées à chaque fois.

**2.** Procédé selon la revendication 1, la constante de gonflement k ou le temps de gonflement caractéristique $\tau$ étant calculé(e) à partir de l'allure temporelle de l'absorption sous pression.

**3.** Procédé selon la revendication 1, la valeur de la différence de capacité d'absorption étant déterminée à deux pressions différentes.

**4.** Procédé selon la revendication 3, la valeur de la différence de capacité d'absorption étant déterminée à une pression différente de zéro et sans pression.

**5.** Procédé selon l'une des revendications 2 à 4, **caractérisé en ce qu'**on calcule, à partir de la constante de gonflement k ou du temps de gonflement caractéristique $\tau$ ou de la différence de la capacité d'absorption, au moins un autre paramètre du superabsorbant au moyen d'une corrélation mesurée au préalable entre la constante de gonflement k, le temps de gonflement caractéristique $\tau$ ou la valeur de la différence de la capacité d'absorption et le paramètre.

**6.** Procédé selon la revendication 5, **caractérisé en ce que** le paramètre est la valeur T20 ou la perméabilité (SFC) ou le pouvoir gélifiant $G_e$.

**7.** Procédé selon les revendications 1 à 6, **caractérisé en ce que** la pression appliquée est d'abord de 49 g/cm$^2$ et est réduite par paliers à 21 g/cm$^2$ et à 0 g/cm$^2$.

8. Procédé selon les revendications 1 à 7, **caractérisé en ce que** le temps pendant lequel la pression respective est appliquée à l'échantillon est d'au moins 30 minutes et d'au plus 90 minutes.

9. Procédé selon l'une des revendications 1 à 8, **caractérisé en ce que** la quantité du superabsorbant utilisé est de 0,5 g à 5 g.

10. Procédé selon la revendication 9, **caractérisé en ce que** le superabsorbant occupe une surface circulaire d'un diamètre de 5 à 7 cm.

11. Procédé selon l'une des revendications 1 à 10, **caractérisé en ce qu'**au moins 95% en poids du superabsorbant présentent une grosseur de grain dans la plage de 100 $\mu$m à 1000 $\mu$m.

12. Procédé selon l'une des revendications 1 à 11, **caractérisé en ce que** le superabsorbant présente une transmission de liquide (SFC) d'au moins 10 x $10^{-7}$ cm$^3$s/g.

13. Procédé selon l'une des revendications 1 à 12, **caractérisé en ce que** le superabsorbant présente une capacité de rétention dans une centrifugeuse (CRC) d'au moins 10 g/g.

14. Utilisation du procédé selon l'une des revendications 1 à 13 pour le contrôle de qualité lors de la fabrication continue de superabsorbants.

15. Utilisation du procédé selon l'une des revendications 1 à 13 pour la caractérisation d'un superabsorbant lors de la mise au point de nouveaux superabsorbants.

16. Dispositif pour la réalisation automatisée du procédé selon l'une des revendications 1 à 13, **caractérisé en ce qu'**un poids exerçant la pression est remplacé par un bras robotique ou celui-ci enlève un poids supplémentaire utilisé pour l'étage de pression précédent, supérieur, ou **en ce qu'**un piston entraîné de manière mécanique, hydraulique ou électrique pousse avec un poids correspondant sur la cellule de mesure.

**Fig. 1**

**Fig. 2**

**Fig. 3**

**Fig. 4**

Equation: SFC ~ CRC * tau0.7psi * aAAP0.0_0.7psi

**Fig. 5**

Equation: Ge ~ aAAP0.0_0.7psi * tau0.3psi

EP 3 994 444 B1

EP 3 994 444 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3831272 A1
- WO 2019162216 A1
- US 9285302 B2
- EP 2535027 A1
- US 20180043052 A1
- WO 03026707 A2
- EP 1611949 A1
- EP 1516884 A2
- EP 0640330 A1

**In der Beschreibung aufgeführte Nicht-Patentliteratur**

- **F.L. BUCHHOLZ ; A.T. GRAHAM.** Modern Superabsorbent Polymer Technology. Wiley-VCH, 1998, 71-103
- *ChemKon (Chemie konkret),* 2013, vol. 20, 127-130
- *Polymer Testing,* 2017, vol. 62, 110-114
- **A. POURJAVADI et al.** *Eur. Polym. J.,* 2008, vol. 44, 1209-1216
- **M. FRANK.** Ullmann's Encyclopedia of Industrial Chemistry. Wiley-VCH Verlag, 2012
- Nonwovens Standards Procedures. 2015
- **F.L. BUCHHOLZ ; A.T. GRAHAM.** Modern Superabsorbent Polymer Technology. Wiley-VCH, 1998, 97-101
- **F.L. BUCHHOLZ ; A.T. GRAHAM.** Modern Superabsorbent Polymer Technology. Wiley-VCH, 1998
- **ROBERT I. KABACOFF.** R in Action. Manning Publications Co,

23